# EUROPÄISCHE PATENTSCHRIFT

(11) **EP 3 452 876 B1**
(45) Veröffentlichungstag und Bekanntmachung des Hinweises auf die Patenterteilung: **09.09.2020**
(21) Anmeldenummer: 17730033.2
(22) Anmeldetag: 05.05.2017
(51) Int. Cl.: G05B 9/02, G05B 19/042

(54) **STEUERUNGSSYSTEM FÜR ELEKTRISCH GESTEUERTE ANLAGEN**
CONTROL SYSTEM FOR ELECTRICALLY CONTROLLED SYSTEMS
SYSTÈME DE COMMANDE D'INSTALLATION COMMANDÉE ÉLECTRIQUEMENT

(30) Priorität: 06.05.2016 AT 504202016
(43) Veröffentlichungstag der Anmeldung: 13.03.2019
(73) Patentinhaber: KEBA AG, 4041 Linz (AT)
(72) Erfinder: PREISINGER, Gernot, 4030 Linz (AT)
(74) Vertreter: Burger, Hannes
(86) Internationale Anmeldenummer: PCT/AT2017/060118
(87) Internationale Veröffentlichungsnummer: WO 2017/190171

(56) Entgegenhaltungen:
- WO-A1-2017/072246
- DE-A1-102014 002 982
- DE-A1-102015 009 524

## Beschreibung

Die Erfindung betrifft ein Steuerungssystem für technische Anlagen, wie es im Anspruch 1 angegeben ist.

Unter einer technischen Anlage sind Maschinen, Maschinenkomponenten, Industrieroboter, Handling-Aggregate bzw. Manipulatoren, Fertigungssysteme, Montageanlagen und sonstige Anlagen mit automatisierten Bewegungs- bzw. Prozessfunktionen zu verstehen.

In der industriellen Praxis ist es üblich, technische Anlagen bzw. Maschinen mit verstell- bzw. verfahrbaren Maschinenkomponenten mithilfe von transportablen Handbediengeräten zu bedienen. Ein wesentlicher Vorteil derartiger, mobiler Handbediengeräte ist die Möglichkeit eines Standort- bzw. Positionswechsels für die jeweilige Bedienperson. Beispielsweise kann eine Bedienperson eine jeweils günstige Beobachtungsposition problemlos einnehmen, was in vielen Fällen eine effizientere Bedienung bzw. Kontrolle von Maschinen erlaubt, als dies mit ortsfest angebrachten Eingabegeräten möglich ist. Insbesondere erlaubt ein mobiles Handbediengerät eine unmittelbare Beobachtung einer Reaktion auf eine Befehlseingabe.

Eine von der Bedienperson jeweils durchgeführte Befehlseingabe am Handbediengerät wird dabei zur entsprechenden Umsetzung zumeist an eine Steuerung für die Maschine übermittelt, welche sodann die entsprechende Funktion an der Maschine auslöst. Je nach Ausführung weisen solche Handbediengeräte Eingabemöglichkeiten für Bedienfunktionen verschiedenster Art auf. Häufig ist auch zumindest ein manuell betätigbares Sicherheitsschaltelement vorhanden, mittels welchem bei Betätigung ein umgehendes Verbringen der Maschine oder von Maschinenkomponenten in einen sicheren Zustand ausgelöst bzw. angewiesen werden kann. Ein übliches und weitläufig bekanntes Beispiel für ein solches Sicherheitsschaltelement ist ein Not-Halt- bzw. Not-Aus-Schalter, üblicherweise farblich rot und gelb gekennzeichnet, oder ein technisch vergleichbar wirkender, aber aus normativen Gründen visuell abweichend ausgestalteter Maschinen-Stoppschalter.

In der industriellen Praxis wird der Betrieb von Maschinen die meiste Zeit von einer oder von mehreren entsprechend programmierten Steuerungen automatisiert ausgeführt bzw. gesteuert.

Eine menschliche Bedienperson ist lediglich in Spezial- bzw. Ausnahmefällen erforderlich. Dies kann beispielsweise der Fall sein, wenn außerordentliche Maschinenoperationen ausgeführt werden müssen, welche die Steuerung(en) der Maschinen nicht ohne menschliche Anweisung ausführen können. Beispiele dafür sind Bedienhandlungen bei der Behebung von Betriebsstörungen, der Vornahme von Wartungsarbeiten, beim Einrichten nach einem Werkzeugwechsel oder beim Teachen von Robotern oder dem Aufbauen neuer Fertigungsprozesse.

In industriellen Betriebsumgebungen in denen oftmals eine Mehrzahl gleichartiger und normalerweise vollautomatisch laufender Maschinen betrieben werden, ist es daher aus Kostengründen vorteilhaft bzw. wünschenswert, wenn nur vergleichsweise wenige Handbediengeräte, beispielsweise ein Handbediengerät je Servicetechniker, wechselweise und nur im jeweiligen Bedarfsfall mit der oder den Steuervorrichtung(en) der Maschine(n) gekoppelt und verwendet werden können.

Hierzu muss das Steuerungssystem für die jeweilige technische Anlage bzw. Maschine eine Kommunikationsschnittstelle zum zeitweiligen Verbinden des Handbediengerätes mit wenigstens einer Steuerungs- bzw. Auswertevorrichtung der jeweiligen Maschine aufweisen. Ist eine manuelle Bedienung oder datentechnische Beobachtung der Maschine nicht erforderlich, kann das Handbediengerät sodann wiederum von der Kommunikationsschnittstelle der Maschine gelöst werden, und beispielsweise für die manuelle Bedienung oder Beobachtung einer anderen Maschine verwendet werden. Damit durch ein An- oder Abkoppeln eines Handbediengerätes ein laufender Betrieb einer technischen Anlage bzw. Maschine nicht unzulässig gestört wird und ein zeitaufwendiges Abstellen und wieder Hochfahren der Maschine im Zuge eines An- oder Abkoppelvorganges des Handbediengerätes vermeiden zu können, müssen das Steuerungssystem und das Handbediengerät für ein jederzeitiges An- oder Abkoppeln zusammenwirken und technisch dafür vorgesehen sein. Man spricht dabei auch von einer hot-plug-Fähigkeit des Handbediengerätes bzw. des übergeordneten Steuerungssystems.

Im Zusammenhang mit einem am Handbediengerät befindlichen Sicherheitsschaltelement in der Art eines Not-Aus-Schalters ergeben sich hierbei eine Reihe besonderer Anforderungen. Ein solcher Not-Aus-Schalter weist in der Regel zwei redundant ausgeführte, zwangsöffnende Kontakte auf, welche in einen gegebenenfalls von einer Sicherheitsüberwachungseinrichtung der Maschine überwachten und ebenfalls zweifach redundant ausgeführten Stromkreis, insbesondere in einen sogenannten Sicherheitsschaltkreis, eingebunden sind. Üblicherweise umfasst ein solcher Sicherheitsschaltkreis also zwei überwachte Stromkreise, in welche je ein Öffner-Kontakt des Not-Aus-Schalters eingebunden ist. In Serie zu diesen Öffner-Kontakten des Not-Aus-Schalters können weitere solcher Öffner-Kontakte anderer Sicherheitsschaltelemente angeordnet sein, wie beispielsweise von Endlagenschaltern zur Überwachung geschlossener Schutztüren oder dergleichen. Sobald einer der Stromkreise geöffnet bzw. unterbrochen wird, also beispielsweise wenn einer der Not-Aus-Schalter betätigt wird, wird dies von der gegebenenfalls implementierten Sicherheitsüberwachungseinrichtung der Maschine registriert, welche Sicherheitsüberwachungseinrichtung darauf hin unverzüglich die Maschine in einen sicheren Zustand überführt, in der Regel also umgehend stillsetzt. Anstelle der Implementierung einer speziellen, typischerweise programmierbaren Sicherheitsüberwachungseinrichtung, ist es für relativ einfache technische Anlagen auch denkbar, bei einer Öffnung bzw. Unterbrechung des zumindest einen Sicherheitsschaltkreises die Energiezufuhr zu Antriebseinheiten zu unterbrechen, was beispielsweise mittels wenigstens einem Leistungsschalter bzw. einem sogenannten Schütz erfolgen kann.

Ein solches Stillsetzen einer Maschine bzw. technischen Anlage ist in einem echten Gefahrenfall notwendig, um Gefahr für Leben und Gesundheit von Menschen abzuwenden. Dieses abrupte oder auch kontrollierte Stillsetzen stellt aber für den Betriebsablauf mitunter eine ganz erhebliche Beeinträchtigung dar, weil es dadurch zu oft langwierigen Wiederanlaufprozessen der Maschinen und in manchen Fällen zu Problemen bei der Serienstabilität bzw. der Fertigungsqualität kommen kann, bis alle Betriebsparameter wieder ihren optimalen Wert erreicht haben.

Wird nun ein Handbediengerät von einer technischen Anlage bzw. Maschine abgekoppelt und werden damit der Sicherheitsschaltkreis bzw. dessen typischerweise redundant ausgeführten Stromkreise an der Steck- bzw. Kommunikationsschnittstelle zwischen der stationären Steuervorrichtung und dem Handbediengerät unterbrochen, nachdem der Not-Aus-Schalter am Handbediengerät in den Sicherheitsschaltkreis eingebundenen ist bzw. über das Verbindungskabel zwischen dem Handbediengerät und der stationären Steuervorrichtung seriell in den Sicherheitsschaltkreis eingeschliffen ist, so muss der Sicherheitsschaltkreis in Bezug auf die sodann bewusst aufgetrennte Kommunikationsschnittstelle umgehend ersatzweise gebrückt werden bzw. muss die Sicherheitsüberwachungseinrichtung in Bezug auf den jeweils abgekoppelten bzw. herausgelösten Not-Aus-Schalter deaktiviert werden, um ein unerwünschtes Stillsetzen der technischen Anlage bzw. Maschine zu verhindern.

Die DE102015009524A1 beschreibt ein gattungsgemäßes Steuerungssystem für technische Anlagen, insbesondere für einen Roboter. Dabei sind eine stationäre Steuerung und ein mobiles Handbediengerät über eine Kabelverbindung mit korrespondierenden Steckkupplungen steuerungstechnisch miteinander verbindbar oder steuerungstechnisch voneinander trennbar. Das mobile Handbediengerät weist einen Nothaltknopf zum Unterbrechen des Antriebsstroms für den Roboter oder zum Verbringen des Roboters in einen sicheren Zustand auf. Die stationäre Steuervorrichtung weist einen Verbindungs-/Trennschalter auf, der manuell betätigt wird, wenn das mobile Handbediengerät an die stationäre Steuervorrichtung angebunden oder davon abgetrennt wird. Damit soll eine Robotersteuerung erreicht werden, welche die Sicherheit eines Bedieners gewährleisten kann und in der Lage ist, Betriebskosten zu verringern, indem ein unnötiger Nothalt eines Roboters vermieden wird.

In der DE102014002982A1 wird ein Steuerungssystem mit einer Verbindungszustandsüberwachungseinheit offenbart, welche den elektrischen oder signaltechnischen Verbindungszustand zwischen einem Handbediengerät und einer Anschlussvorrichtung überwacht und beim Abkoppeln eines Handbediengerätes den abgekoppelten Not-Aus-Schalter signaltechnisch äquivalent durch eine Schaltung in der Anschlussstelle nachbildet und in den Sicherheitskreis der Maschine einkoppelt. Jedoch kann durch eine Verbindungszustandsüberwachung alleine nicht zwischen einem von der Bedienperson gewollten Trennen des Handbediengerätes an der vorgesehenen Koppelstelle und einem etwaigen Durchtrennen des Kabels in der Folge eines Störfalles unterschieden werden. Beim gewollten Lösen des Handbediengerätes muss daher entweder eine zusätzliche Maßnahme von der Bedienperson gesetzt werden um technisch eine Plausibilisierung des gewollten Verbindungsabbruchs zu ermöglichen und ein Auslösen des oder der Sicherheitsschaltkreise(s) zu vermeiden, und/oder es müssen für eine solche Plausibilisierung nach dem Lösen des Handbediengerätes an dessen Stelle steckerartige Überbrückungselemente eingesetzt werden und muss gleichzeitig das dauerhafte Vorliegen eines nur halb gesteckten Zustandes ausgeschlossen werden.

Andere Lösungen aus dem Stand der Technik sehen eine oder mehrere Schaltkontakte im kabelseitigen Teil einer Steckverbindung vor, um das Lösen oder Herstellen der Kopplung signaltechnisch zu erfassen und ein Außerkraftsetzen der Wirkung des Not-Aus-Schalters im abgekoppelten Zustand zu ermöglichen. Die JPH0765908 A zeigt eine solche Lösung mit elektrisch voreilend trennenden Schaltkontakten. Solche Lösungen vereinfachen zwar die Handhabung beim Ab- und Ankoppeln eines Handbediengerätes, indem keine zusätzliche plausibilisierende Bedienhandlung zu setzen ist, allerdings verbleibt hier das Problem, dass sich die Steckverbindung auch in einem Undefinierten, halb gesteckten Zustand befinden kann, d.h. ein Zustand, in dem zwar eine Steckvorrichtung mechanisch in der korrespondierenden Aufnahme gehalten wird, jedoch zumindest nicht alle Kontakte ordnungsgemäß kontaktieren. In einem solchen Fall könnte eine Bedienperson annehmen, dass aufgrund der augenscheinlich bestehenden Kopplung des Handbediengerätes zur Maschine bzw. zur Steuervorrichtung der Maschine auch die Funktion des Not-Aus-Schalters vermeintlich gegeben sei. In einer überraschend eintretenden Notsituation würde dann ein solcher Not-Aus-Schalter vergeblich betätigt werden. Erst durch die ausbleibende Wirkung wäre die Person veranlasst, nach weiteren, fix aufgebauten Not-Aus-Schaltern im Bereich der Maschine Ausschau zu halten und diese zu betätigen, wodurch wertvolle Zeit verloren ginge.

Aufgabe der vorliegenden Erfindung war es, diese Nachteile des Standes der Technik zu überwinden und ein verbessertes Steuerungssystem für die sichere Steuerung bzw. Bedienung von technischen Anlagen zur Verfügung zu stellen.

Diese Aufgabe wird durch ein Steuerungssystem gemäß den Ansprüchen gelöst.

Das vorgeschlagene Steuerungssystem dient der sicheren Steuerung einer technischen Anlage bzw. Maschine, und umfasst wenigstens eine stationäre Steuervorrichtung mit Ein- und Ausgangsschnittstellen zum Aufbau von Leitungsverbindungen zu einer zu steuernden technischen Anlage.

Zudem ist wenigstens ein von einer Bedienperson tragbares, elektronisches Handbediengerät zur Beeinflussung und Beobachtung von steuerungstechnischen Abläufen und Zuständen des Steuerungssystems respektive einer daran angebundenen technischen Anlage vorgesehen. Ein solches Handbediengerät weist eine drahtlose, steuerungstechnische Kommunikationsschnittstelle und auch eine über ein Verbindungskabel aufbaubare, steuerungstechnische Kommunikationsschnittstelle auf, mit welchen Kommunikationsschnittstellen jeweils eine datentechnische Einbindung des Handbediengerätes in das Steuerungssystem ermöglicht ist.

Ferner ist wenigstens ein von einer Bedienperson betätigbares Sicherheitsschaltelement, beispielsweise ein sogenannter Not-Aus-Schalter und/oder ein dreistufiger Zustimmtaster, am Handbediengerät ausgebildet, welches Sicherheitsschaltelement für die Ausführung und/oder Beendigung von potentiell sicherheitskritischen Steuerkommandos oder Bewegungsabläufen vorgesehen ist.

Das Steuerungssystem umfasst weiters einen im Normalzustand geschlossenen Sicherheitsschaltkreis, welcher Sicherheitsschaltkreis beim Eintreten eines potentiell gefahrbringenden Zustandes bzw. zur Abwehr eines Gefahrenzustandes in einen unterbrochenen bzw. geöffneten Zustand überführbar ist. In diesem Zustand ist der Sicherheitsschaltkreis zur Abschaltung von potentiell gefahrbringenden Bewegungen oder Abläufen einer technischen Anlage oder zur Herbeiführung eines sicheren Zustandes einer steuerungstechnisch angebundenen, technischen Anlage ausgebildet bzw. vorgesehen.

Die kabelgebundene, steuerungstechnische Kommunikationsschnittstelle umfasst dabei eine kontaktbehaftete Steckschnittstelle am Handbediengerät, welche Steckschnittstelle ein erstes Kupplungselement am Handbediengerät und ein gegenüber dem ersten Kupplungselement bedarfsweise an- und abkuppelbares zweites Kupplungselement aufweist, welches zweite Kupplungselement am Verbindungskabel ausgeführt ist. Dadurch ist das Handbediengerät bei Verwendung der drahtlosen steuerungstechnischen Kommunikationsschnittstelle vollständig vom Verbindungskabel trennbar und besonders ergonomisch benutzbar.

Wesentlich ist, dass unmittelbar im zweiten Kupplungselement oder in unmittelbarer Nähe zum zweiten Kupplungselement am oder im Verbindungskabel wenigstens ein Abschlusskennzeichen ausgebildet ist, welches Abschlusskennzeichen von einem Abschlusskennzeichen-Detektierungsmittel des Steuerungssystems bzw. der stationären Steuervorrichtung elektronisch erfassbar ist.

Das Steuerungssystem, insbesondere zumindest eine der stationären Steuervorrichtungen, umfasst weiters ein Handbediengerät-Detektierungsmittel, welches zur Erfassung des Vorliegens oder Nicht-Vorliegens einer steuerungstechnischen Anbindung eines Handbediengerätes an das Steuerungssystem vorgesehen ist. Die Erkennung eines Vorliegens oder Nicht-Vorliegens einer steuerungstechnischen Anbindung eines Handbediengerätes an das Steuerungssystem kann beispielsweise durch eine Erfassung bzw. Auswertung des elektrischen Energieverbrauchs, insbesondere durch eine Strommessung erfolgen, oder durch Evaluierung des Vorliegens oder Nicht-Vorliegens einer daten- bzw. signaltechnischen Kommunikation umgesetzt sein.

Wesentlich ist in diesem Zusammenhang, dass das Steuerungssystem, insbesondere die stationäre Steuervorrichtung bzw. eine darin implementierte Überwachungselektronik, bei Erfassung eines Nicht-Vorliegens einer steuerungstechnischen Anbindung eines Handbediengerätes und bei gleichzeitiger Erfassung eines Abschlusskennzeichens eine von einer Bedienperson bewusst vorgenommene Auftrennung der kontaktbehafteten Schnittstelle am Handbediengerät erkennt bzw. dadurch vom Steuerungssystem von einer gewollten Auftrennung der Signalverbindungen über das Verbindungskabel ausgegangen wird. Daraufhin wird vom Steuerungssystem, insbesondere von zumindest einer stationären Steuervorrichtung bzw. einer darin implementierten Überwachungselektronik, als Ersatz zu dem abgekoppelten oder unwirksamen Sicherheitsschaltelement am abzukoppelnden bzw. soeben abgekoppelten Handbediengerät der Sicherheitsschaltkreis im Zuge des Absteckens des Handbediengerätes überbrückt bzw. geschlossen gehalten. Insbesondere kann vorgesehen sein, dass in einem solchen Fall das Steuerungssystem, beispielsweise eine stationäre Steuervorrichtung bzw. eine gesonderte Überwachungselektronik, den Sicherheitsschaltkreis z.B. an der Ankoppelstelle des Handbediengerätes unmittelbar in den geschlossenen Zustand überführt, um ein ungewolltes Stillsetzen der technischen Anlage zu vermeiden. Alternativ dazu kann das Steuerungssystem, insbesondere zumindest eine stationäre Steuervorrichtung bzw. eine Überwachungselektronik zur Aktivierung eines Ersatz- bzw. Parallelkontaktes zu dem Sicherheitsschaltelement am Handbediengerät vorgesehen sein, insbesondere einen solchen Ersatz- bzw. Parallelkontakt in den geschlossenen Zustand zu überführen, wenn das Verbindungskabel vom Handbediengerät abgesteckt wird. Die genannten Maßnahmen werden dabei nur dann gesetzt, wenn das Sicherheitsschaltelement am jeweiligen Handbediengerät unmittelbar vor dem Abstecken des Verbindungskabels von dem Handbediengerät in seinem nicht betätigten Zustand war, insbesondere im Ruhzustand vorgelegen hatte.

Ein Vorteil der erfindungsgemäßen Maßnahmen liegt darin, dass dadurch das Steuerungssystem, insbesondere wenigstens eine der stationären Steuervorrichtungen bzw. eine gesondert implementierte Überwachungselektronik, das bewusste Abkoppeln des Handbediengerätes vom Verbindungskabel, insbesondere an der Steckschnittstelle zwischen dem Handbediengerät und dem Verbindungskabel, von einem störungs- oder unfallbedingten Kabelbruch unterscheiden kann, ohne dass eine explizite und zusätzliche Plausibilisierungshandlung seitens der Bedienperson erforderlich ist. Somit ist zum einen eine besonders funktionszuverlässige bzw. funktionssichere Ausführung geschaffen, welche zudem hohen Handlingkomfort bietet. Nachdem keinerlei manuelle Plausibilisierungshandlungen seitens der Bedienperson notwendig sind, um einen bewussten Absteckvorgang von einem störungsbedingten Verlust der Kopplung unterscheiden zu können, ist auch ein hoher praktischer Nutzen und eine hohe Anwenderfreundlichkeit erzielbar. Darüber hinaus kann der Schulungsbedarf zur Nutzung des Handbediengerätes möglichst gering sein, da keinerlei besondere Handgriffe bzw. Maßnahmen gesetzt werden müssen, wenn das Handbediengerät während des laufenden Betriebs vom Verbindungskabel abgesteckt wird. Demnach kann auf automatisierte Art und Weise bei Erkennung einer bewussten Trennung des Verbindungskabels vom Handbediengerät das Steuerungssystem bzw. die implementierte Überwachungselektronik den Sicherheitsschaltkreis, insbesondere den Not-Aus-Kreis, elektrisch überbrücken, das heißt deaktivieren. Andernfalls kann der Sicherheitsschaltkreis automatisiert geöffnet und damit die technische Anlage aufgrund eines Not- bzw. Störungsfalles sicher stillgesetzt werden.

Wesentlich ist dabei, dass das Vorliegen einer gewollten Auftrennung der Kabelverbindung zwischen dem Handbediengerät und der Koppelgegenstelle mit hoher Verlässlichkeit automatisiert erkannt wird und von einer Unterbrechung zufolge eines defekten bzw. zerstörten Kabels technisch sicher unterscheidbar ist. Insbesondere erfolgt die Funktionsprüfung des Verbindungskabels ausgehend von der lokalen Steuervorrichtung bzw. Überwachungselektronik über das entsprechende Verbindungskabel in Richtung zu jenem Kupplungselement, welches zur Ankopplung an ein Handbediengerät vorgesehen ist. Durch die automatisierte Prüfung einer intakten bzw. mit hoher Wahrscheinlichkeit intakten Verbindung in Richtung zum Kupplungselement für die Ankopplung an ein Handbediengerät wird auch der Vorteil erreicht, dass diese Prüfung völlig unabhängig vom Vorliegen eines an- bzw. abgesteckten Handbediengerätes erfolgt. Insbesondere erfolgt die Überprüfung ausgehend von Seiten der stationären Einheiten, beispielsweise in Art einer Anschlussbox mit der integrierten stationären Steuervorrichtung bzw. einer integrierten Überwachungselektronik.

Von besonderem Vorteil ist auch, dass diese Lösung im Fall eines An- bzw. Absteckvorganges auf Seiten des Handbediengerätes die Quittierung des Absteckvorganges durch eine vor- oder nachgeordnete Bedienhandlung völlig erübrigt. Eine solche wäre ansonsten zur Plausibilisierung und zur Unterscheidung eines gewollten Absteckvorganges gegenüber einem Kabelbruch aus sicherheitstechnischen Überlegungen grundsätzlich erforderlich. Es sind also weder Bedienhandlungen in Form von manuellen Quittierungen bzw. Tastenbetätigungen erforderlich, noch ist es erforderlich, diverse Brückenstecker seitens der Bedienperson an- bzw. abzukoppeln.

Insbesondere ist es durch das erfindungsgemäß vorgesehene Abschlusskennzeichen-Detektierungsmittel ermöglicht, eine Kabelunterbrechung, insbesondere einen Kabelbruch oder eine Kabeldurchtrennung, zuverlässig und verzögerungsfrei zu detektieren, ohne dass eine vor- oder nachgelagerte Plausibilisierungshandlung von Seiten der Bedienperson erforderlich ist. Die besonders benutzerorientierte bzw. eine hohe Nutzerfreundlichkeit aufweisende "Hot-Un-plug"-Fähigkeit erfordert also keine Betätigung eines Schaltelementes und auch keinen Umsteckvorgang eines Hilfs- bzw. Ersatz-Brückensteckers. Daraus ergibt sich eine hohe Benutzerfreundlichkeit, da auch keine stressverursachenden bzw. unter Zeitdruck stehenden Aktionen erforderlich sind, welche von der Bedienperson durchzuführen wären, bevor die technische Anlage aus sicherheitstechnischen Gründen automatisch stillgesetzt wird, insbesondere in den Not-Aus-Zustand versetzt wird.

Vorteilhaft sind auch die Maßnahmen gemäß Anspruch 2, da dadurch automatisiert und in zuverlässiger Art und Weise eruiert werden kann, ob ein partieller oder vollständiger Kabelbruch vorliegt. Insbesondere bei differierenden Ergebnissen seitens des Handbediengerät-Detektierungsmittels und des Abschlusskennzeichen-Detektierungsmittels ist davon auszugehen, dass im Verbindungskabel eine Störung vorliegt. Dies insbesondere dann, wenn das Abschlusskennzeichen-Detektierungsmittel nicht eruierbar ist, das Handbediengerät-Detektierungsmittel jedoch von einer Anbindung eines Handbediengerätes ausgeht. Insofern können dadurch Kabel- oder Adernbrüche im Verbindungskabel ermittelt und/oder inkompatible bzw. nicht vorgesehene Verbindungskabel hinsichtlich einer Benutzung verweigert werden. Die entsprechende Störungsmeldung kann dabei bis hin zu einer Unterbindung der Ausführung von potentiell sicherheitskritischen Steuerkommandos führen oder auch zu einer Stillsetzung der Anlage über den Sicherheitskreis - vergleichbar mit einer Not-Stopp-Signalisierung.

Ein Vorteil der Maßnahmen gemäß Anspruch 3 liegt darin, dass eine äußerst komfortable Einbindung des Handbediengerätes in das Steuerungssystem geschaffen ist. Insbesondere wir dadurch das wenigstens eine Sicherheitsschaltelement des Handbediengerätes automatisiert in den Sicherheitsschaltkreis eingebunden bzw. funktionswirksam an diesen gekoppelt. Diese Einbindung erfolgt aber nur dann, wenn das Verbindungskabel mit hoher bzw. höchster Wahrscheinlichkeit fehlerfrei ist, sodass in Gefahren- bzw. Notzuständen eine unmittelbare Herbeiführung eines sicheren Zustandes durch Betätigung des Sicherheitsschaltelementes ermöglicht ist.

Zweckmäßige Ausführungsvarianten für das Abschlusskennzeichen sind in Anspruch 4 angegeben. Der Vorteil eines elektrischen Verbindungsbügels liegt darin, dass dieser besonders kostengünstig implementiert werden kann und dennoch eine hohe Detektierungszuverlässigkeit garantiert werden kann. Ein Vorteil der Anbindung eines ohmschen Widerstandes liegt darin, dass dadurch auch eventuelle Kurzschlüsse zwischen Adern des Verbindungskabels detektiert werden können, wenn der Widerstandswert vom zu erwartenden Soll-Wert abweicht. Gegebenenfalls ist die Einbindung der Abschirmung des Verbindungskabels praktikabel, da damit nicht nur überprüfbar ist, ob das Verbindungskabel unterbrochen ist, sondern es wird auch ganz speziell die Abschirmung des Kabels überprüft, welche üblicherweise über andere Kontaktverbindungen geführt wird als die Signalleiter. Eine solche Überprüfung der Kabelschirmung kann vorteilhaft sein, da diese hinsichtlich der Unterdrückung elektromagnetischer Störeinflüsse von Bedeutung ist.

Zweckmäßig sind auch die Maßnahmen gemäß Anspruch 5. Nachdem dabei das Abschlusskennzeichen bzw. das Brückenelement im zweiten Kupplungselement bzw. im entsprechenden Endabschnitt des Verbindungskabels durch ein Bauteil mit frequenzabhängigem und/oder nicht linearem Übertragungsverhalten gebildet ist, kann dessen Vorhandensein durch ein entsprechend gestaltetes Testsignal samt Prüfung des Übertragungsverhaltens ermittelt werden. Dadurch können nicht nur Unterbrechungen des Kabels detektiert werden, sondern auch Kurzschlüsse, die etwa durch eine Quetschung bzw. ein Abquetschen des Kabels verursacht sein können, wodurch die Zuverlässigkeit der Überprüfung nochmals gesteigert wird. Das Testsignal, welches über das brückenartige Abschlusskennzeichen geführt wird, kann dabei Wechselstromanteile einer oder mehrerer Frequenzen bzw. wechselnde Frequenzen aufweisen. Diese Maßnahmen ermöglichen außerdem die technisch zuverlässig unterscheidbare Kennzeichnung unterschiedlich ausgeführter Kabel trotz mechanisch kompatibler Stecker, beispielsweise hinsichtlich der möglichen Übertragungsraten für Visualisierungsdaten oder der an einer bestimmten Steckstelle im Hinblick auf Sicherheitsüberlegungen zulässigen maximalen Länge eines Kabels.

Irrtümliche Manipulationen am Verbindungskabel, welche zu Störungen bzw. Problemen bei der Inbetriebnahme führen könnten, werden durch die Maßnahmen gemäß Anspruch 6 ausgeschlossen. Vom Benutzer verursachte Verzögerungen bei der Inbetriebnahme können somit ausgeschlossen werden.

Von Vorteil sind auch die Maßnahmen gemäß Anspruch 7. Insbesondere ist die Detektierbarkeit des Abschlusskennzeischens nicht davon abhängig, ob das entsprechende Kupplungselement am Handbediengerät an- oder abgesteckt ist. Eine Detektierbarkeit des Abschlusskennzeischens ist somit jederzeit und unabhängig von der An- oder Abkopplung eines Handbediengerätes möglich. Unter Umständen funktional instabile elektromechanische Betätigungen, welche vom Koppelzustand der Steckschnittstelle abhängen, sind dadurch ebenso vermieden.

Durch die Maßnahmen gemäß Anspruch 8 ist es ermöglicht, das Verbindungskabel zur Gänze und relativ rasch vom Steuerungssystem zu entfernen. Ein besonderer Vorteil dieser Maßnahme liegt darin, dass damit die Gefahr von Beschädigungen, wie sie in industriellen Umgebungen auftreten können, hintangehalten wird. In gleicher Weise wird die Gefahr von Unfällen oder eine Behinderung durch herumliegende Kabel reduziert.

Von Vorteil ist in diesem Zusammenhang auch die Weiterbildung nach Anspruch 9, da dadurch Seitens der stationären Steuervorrichtung bzw. der implementierten Überwachungselektronik feststellbar ist, ob ein Verbindungskabel grundsätzlich angeschlossen ist. Für den Fall, dass ein Kabelstecker eines Verbindungskabels detektierbar ist, das Abschlusskennzeichen jedoch nicht detektierbar ist, kann seitens des Steuerungssystems davon ausgegangen werden, dass das Verbindungskabel entweder beschädigt ist, oder nicht für eine Verwendung in Verbindung mit dem Steuerungssystem vorgesehen ist bzw. dafür nicht freigegeben ist.

Durch die Maßnahmen gemäß Anspruch 10 bzw. 11 ist es ermöglicht, die erfindungsgemäßen Maßnahmen problemlos in bestehende Steuerungssysteme einzubinden. Insbesondere können dadurch die mobilen Handbediengeräte in einfacher Art und Weise an bereits vorhandene Steuerungssysteme bzw. an Steuerungssysteme von beliebigen Herstellern angebunden werden. Insbesondere ist es dadurch ermöglicht, die entsprechende Überwachungselektronik bei Bedarf dem Steuerungssystem hinzuzufügen und somit eine Art Upgrade zu erzielen, welches praktikabel und möglichst kosteneffizient ausführbar ist, ohne dabei das komplette Steuerungssystem ersetzen zu müssen.

Von Vorteil sind dadurch auch die Maßnahmen gemäß Anspruch 12, da damit die Sicherheitsfunktionen des Handbediengerätes, insbesondere die Verfügbarkeit des Sicherheitsschaltelements in hohem Ausmaß garantiert werden kann. Somit ist bei kabelgebundener Einbindung des Handbediengerätes die Kontrolle bzw. Beeinflussung potentiell sicherheitskritischer Steuerungsfunktionen gestattet bzw. ermöglicht, ohne dass hierfür aufwändige funktechnische Maßnahmen erforderlich sind, um die geforderte Systemsicherheit bzw. Systemzuverlässigkeit erzielen zu können. Insbesondere ist dadurch eine Art "Semi-Wireless"-Funktionalität eines in das Steuerungssystem eingebundenen Handbediengerätes geschaffen. Unter anderem ist dadurch ein optimales Kosten- zu Nutzen-Verhältnis erzielbar. Dies insbesondere dann, wenn das Steuerungssystem in Kombination mit den Maßnahmen gemäß Anspruch 13 umgesetzt ist.

In Zusammenhang mit der erfindungsgemäßen Ausführung sind auch die Maßnahmen gemäß Anspruch 14 von besonderem Nutzen. Dadurch kann in unmissverständlicher Art und Weise automatisiert signalisiert werden, ob das Sicherheitsschaltelement am Handbediengerät funktional verfügbar ist bzw. funktionswirksam werden kann, oder ob es in einem nicht benutzbaren, inaktiven Zustand vorliegt. Die entsprechenden Maßnahmen sind dabei zuverlässig implementierbar, ohne dass aufwändige mechanische Unterscheidungsmaßnahmen bzw. manuelle Aktionen getroffen werden müssten. Auch dadurch kann die Systemzuverlässigkeit und auch die Systemsicherheit gesteigert werden.

Entsprechend einer zweckmäßigen Maßnahme ist diese interne Beleuchtung im Sicherheitsschaltelement zur Abstrahlung von rotfarbenem Licht ausgebildet. Dadurch kann klar und unmissverständlich die Funktionsverfügbarkeit des Sicherheitsschaltelementes erkannt werden, insbesondere wenn es in einem rotfarben beleuchteten Zustand vorliegt. Andererseits kann dieses Sicherheitsschaltelement schwach lichtdurchlässig bzw. milchig ausgeführt sein, wenn es in seinem inaktiven, funktional nicht verfügbaren Zustand vorliegt und somit die Beleuchtung deaktiviert ist. Dieser Zustand liegt insbesondere bei drahtloser Ankopplung des Handbediengerätes an das Steuerungssystem vor.

Zweckmäßig sind auch die Maßnahmen nach Anspruch 15, da damit unmissverständlich dargelegt bzw. signalisiert ist, wenn das Sicherheitsschaltelement am Handbediengerät keine Funktionswirksamkeit aufweist, weil das Handbediengerät über seine drahtlose Kommunikationsschnittstelle in das Steuerungssystem eingebunden ist und daher nur für sicherheitstechnisch unkritische Beobachtungsaufgaben oder Parametrierungen eingesetzt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines elektronischen Steuerungssystems sowie Komponenten einer mit dem Steuerungssystem gesteuerten Anlage;
- Fig. 2: ein Handbediengerät mit einem Sicherheitsschaltelement, welches Handbediengerät eine bedarfsweise an- und absteckbare Kabelverbindung für eine kabelgebundene Einbindung in ein Steuerungssystem aufweist und zudem eine drahtlose Kommunikationsschnittstelle zur drahtlosen Einbindung in das Steuerungssystem aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

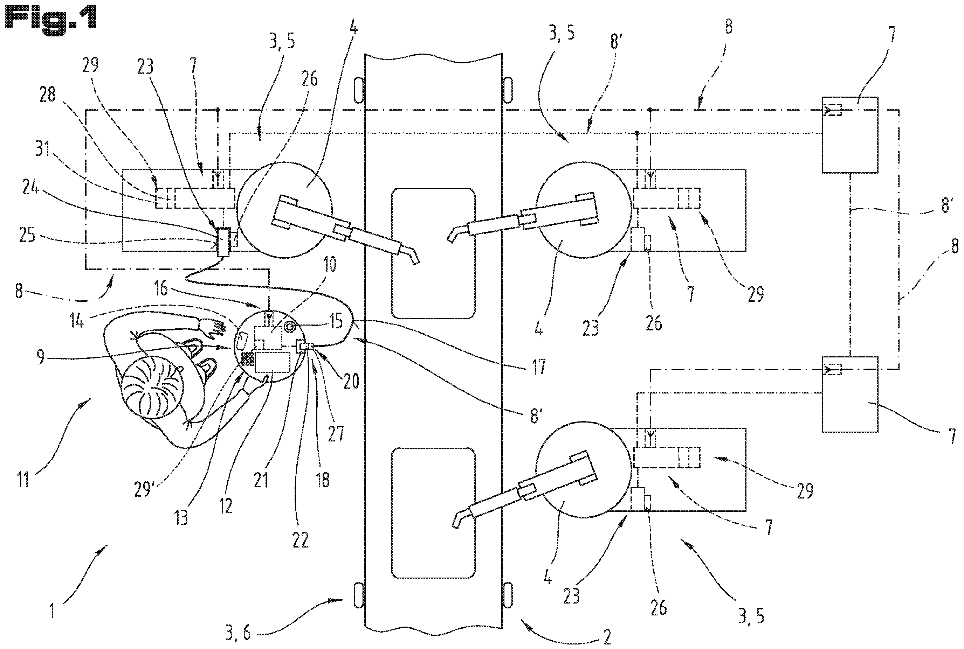

In Fig. 1 sind Komponenten eines Steuerungssystems 1 sowie einer mit dem Steuerungssystem 1 gesteuerten Anlage 2 veranschaulicht. Die ausschnittsweise dargestellte technische Anlage 2 umfasst mehrere Anlagenkomponenten 3, welche in dem Beispiel gemäß der Fig. 1 durch Industrieroboter 4 umfassende Bearbeitungsstationen 5 gebildet sein können. Im Prinzip kann eine technische Anlage 2 beliebige, weitere Anlagenkomponenten 3 umfassen, um technische Prozesse, beispielsweise Fertigungsprozesse, chemische Verfahren und dergleichen zumindest teilweise automatisiert abwickeln bzw. ausführen zu können. Zum Beispiel umfasst die im Ausführungsbeispiel gemäß Fig. 1 dargestellte Anlage 2 eine Transportvorrichtung 6 zum Transport von Gegenständen, Werkstücken, Halbzeugen und dergleichen zwischen den Bearbeitungsstationen 5 bzw. zur Bereitstellung von Gegenständen für die einzelnen Bearbeitungsstationen 5.

Wie in Fig. 1 dargestellt ist, weist das Steuerungssystem 1 zumindest eine stationär ausgebildete, elektronische Steuervorrichtung 7 auf. Wie grundsätzlich bekannt ist, kann die zumindest eine Steuervorrichtung 7 auch Bestandteil eines Steuerungsnetzwerkes mit mehreren dezentral angeordneten Steuervorrichtungen 7 sein, wie dies ebenso in Fig. 1 schematisch angedeutet ist. Die einzelnen Steuervorrichtungen 7 können hierbei zur Ausführung von bestimmten Aufgaben, beispielsweise zur Überwachung und Steuerung der Anlage 2 bzw. zur Überwachung und Steuerung bestimmter Anlagenkomponenten 3 ausgebildet bzw. programmiert sein, wobei die Steuerungsarchitektur zur Überwachung und Steuerung der Anlage 2 im Prinzip beliebige Topologien aufweisen kann.

Bedarfsabhängig können die einzelnen, stationär positionierten Steuervorrichtungen 7 zur kabelgebundenen Kommunikation über Kommunikationsverbindungen 8' und/oder zur kabellosen Kommunikation über drahtlose Kommunikationsverbindungen 8 ausgebildet sein, wie dies in Fig. 1 schematisch angedeutet ist. Eine solche drahtlose Kommunikationsverbindung 8 kann beispielsweise durch eine Verbindung nach dem WLAN- oder Bluetooth-Standard bzw. durch eine standardisierte Funkverbindung für industrielle Umgebungen gebildet sein.

Das Steuerungssystem 1 umfasst des Weiteren wenigsten ein tragbares, mobiles Handbediengerät 9. Das wenigstens eine Handbediengerät 9 bzw. eine elektronische Steuervorrichtung 10 des Handbediengeräts 9 kann wiederum signal- bzw. datentechnisch über eine drahtlose Kommunikationsverbindung 8 mit einer oder mehreren der stationären Steuervorrichtungen 7 des Steuerungssystems 1 verbunden sein. Das wenigstens eine Handbediengerät 9 ist zur Benutzung durch eine Bedienperson 11 vorgesehen bzw. ausgebildet, wobei ein Signal- bzw. Datenaustausch zwischen dem Handbediengerät 9 und einer Steuervorrichtung 7 über die drahtlose Kommunikationsverbindung 8 erfolgen kann. Alternativ oder in Kombination dazu können zwischen den einzelnen Steuervorrichtungen 7, 10 auch kabelgebundene Kommunikationsverbindungen 8' vorgesehen sein.

Grundsätzlich können die stationären Steuervorrichtungen 7 funktionale Steuerungseinheiten einer Anlage 2 bzw. Anlagenkomponente 3 sein, welche zum Beispiel zur Umsetzung von automatisiert generierten Steuerungskommandos dienen, oder zur Umsetzung von am Handbediengerät 9 eingegebenen bzw. ausgelösten Steuerungskommandos vorgesehen sind. Solche Steuervorrichtungen 7 können beispielsweise zur Ansteuerung von Aktoren oder Antrieben für bestimmte Anlagenkomponenten 3 bzw. zur Erfassung der Signale von Sensoren bzw. Positionsschaltern ausgebildet sein. Hierfür weisen die Steuervorrichtungen 7 mehrere Ein- und Ausgangsschnittstellen zum Aufbau von Leitungsverbindungen zu einer zu steuernden technischen Anlage 2 auf. Es können auch weitere Steuervorrichtungen 7 vorgesehen sein, zum Beispiel auch übergeordnete Steuervorrichtungen 7, welche insbesondere logistische Abläufe, Energiebereitstellungsabläufe oder Übertragungsabläufe zwischen einzelnen Anlagenkomponenten 3 automatisiert oder teilautomatisiert abwickeln, wie dies am rechten Rand von Fig. 1 beispielhaft veranschaulicht wurde. Bevorzugt ist das zumindest eine Handbediengerät 9, insbesondere die darin eingebaute Steuervorrichtung 10, via die drahtlose und/oder die kabelgebundene Kommunikationsschnittstelle 8, 8' mit wenigstens einer der stationären Steuervorrichtungen 7 des Steuerungssystems 1 signal- bzw. datentechnisch in Kommunikationsverbindung versetzbar.

Im Rahmen dieses Dokumentes wird unter einer Übertragung von Signalen bzw. Daten grundsätzlich auch eine Bereitstellung von Signalen bzw. Daten verstanden.

Zur Anzeige von Informationen bzw. Daten weist das wenigstens eine Handbediengerät 9 wenigstens ein Ausgabeelement 12, insbesondere wenigstens ein Display bzw. einen Touch-Screen auf. Zur Eingabe von Einstellungen und/oder zum manuellen Auslösen von Steuerungskommandos weist das Handbediengerät 9 wenigstens ein Eingabeelement 13, beispielsweise Taster, Schalter, Drehregler, einen Joystick oder dergleichen auf. Die jeweilige Ausgestaltungsform der Ausgabeelemente 12 und der Eingabeelemente 13 des wenigstens einen Handbediengerätes 9 kann dabei den diversen Anforderungen und Bedürfnissen bzw. dem jeweiligen Anwendungszweck angepasst sein.

Zum Zwecke einer zumindest zeitweilig netzautarken, elektrischen Stromversorgung kann das Handbediengerät 9 außerdem eine interne Stromversorgungseinheit 14 aufweisen, welche vorzugsweise wenigstens einen elektrochemischen Akkumulator umfasst. Diese interne Stromversorgungseinheit 14 ist insbesondere für einen rein kabellosen Betrieb des Handbediengerätes 9 erforderlich, also im Betriebszustand ohne Anschluss eines Energieversorgungs- bzw. Datenkabels notwendig, um die elektronischen Komponenten des Handbediengerätes 9 unabhängig von einem kabelgebundenen Stromversorgungsanschluss mit elektrischer Energie versorgen und betreiben zu können. Bei einer signal- bzw. datentechnischen Anbindung nur über die drahtlose Kommunikationsschnittstelle 16 ist somit eine akkugespeiste, interne Stromversorgungseinheit 14 ein Bestandteil des Handbediengerätes 9.

Wenigstens eines der Handbediengeräte 9, welches in das Steuerungssystem 1 funktional einbindbar ist, weist wenigstens ein manuell betätigbares Sicherheitsschaltelement 15 auf, mit welchem bei Betätigung durch eine Bedienperson 11 beispielsweise eine unmittelbare Stillsetzung der technischen Anlage 2 bzw. einer spezifischen Anlagenkomponente 3, oder eine Überführung der technischen Anlage 2 bzw. einer spezifischen Anlagenkomponente 3 in einen sicheren Zustand ausgelöst werden kann. Ein solches Sicherheitsschaltelement 15 kann durch wenigstens einen sogenannten Not-Aus- bzw. Not-Halt-Schalter gebildet sein und/oder durch wenigstens einen Zustimmtaster mit sogenannter Panik-Schaltstellung definiert sein.

Das Handbediengerät 9 weist entsprechend einer praktikablen Ausführungsform eine drahtlose, steuerungstechnische Kommunikationsschnittstelle 16 und auch eine über ein Verbindungskabel 17 aufbaubare, steuerungstechnische Kommunikationsschnittstelle 18 auf. Mit jeder dieser beiden Kommunikationsschnittstellen 16, 18 ist eine signal- bzw. datentechnische Einbindung des Handbediengerätes 9 in das Steuerungssystem 1 ermöglicht, wobei der Umfang der am Handbediengerät 9 verfügbaren Steuerkommandos davon abhängig ist, welche der Kommunikationsschnittstellen 16, 18 für die signal- bzw. datentechnische Einbindung gerade genutzt wird bzw. ob beide gleichzeitig genutzt werden. Zur Erhöhung der Sicherheit bei der steuerungstechnischen Bedienung bzw. Beeinflussung von technischen Anlagen 2, von welchen potentielle Gefahren für Menschen bzw. schwerwiegende Schäden an der technischen Anlage 2 bzw. an zu bearbeitenden Objekten oder Werkstücken ausgehen können, ist am Handbediengerät 9 das zuvor bereits erwähnte, wenigstens eine Sicherheitsschaltelement 15 vorgesehen.

Entsprechend einer zweckmäßigen Maßnahme ist dabei vorgesehen, dass mittels dem Handbediengerät 9 nur dann potentiell gefahrbringende Funktionen bzw. Steuerbefehle ausgeführt werden können, wenn das Handbediengerät 9 via das Verbindungskabel 17 in das Steuerungssystem 1 eingebunden ist, das heißt über eine mehrpolige elektrische Kabelverbindung bzw. über eine Mehrzahl von Kabeladern an das Steuerungssystem 1 angeschlossen ist. Insbesondere ist es dadurch möglich, die Schalt- bzw. Sicherheitsfunktionen des Sicherheitsschaltelementes 15 über das mehrpolige Verbindungskabel 17 zu führen und so eine hochverfügbare bzw. besonders zuverlässige und zeitlich im Wesentlichen unverzögerte Abschaltfunktion mittels dem Sicherheitsschaltelement 15 zu erzielen.

Für den Fall, dass das Handbediengerät 9 in seinem rein drahtlosen Betriebsmodus (Wireless-Mode) eingesetzt wird, also ausschließlich über seine drahtlose Kommunikationsschnittstelle 16 in das Steuerungssystem 1 eingebunden ist, stehen der Bedienperson 11 mittels dem Handbediengerät 9 vorwiegend nur Beobachtungsfunktionen oder unkritische Steuerungsfunktionen zur Verfügung. Darüber hinaus kann im Steuerungssystem 1 eine sogenannte Hybrid-Funktion vorgesehen sein, durch welche das Handbediengerät 9 in einen kabelgebundenen Zustand (Cable-Mode) versetzt werden kann, in welchem auch die Funktionen des Sicherheitsschaltelements 15 mit hoher Zuverlässigkeit verfügbar sind. Demgegenüber sind in einem rein drahtlosen Betriebsmodus (Wireless-Mode) des Handbediengerätes 9 die Funktionen des Handbediengerätes 9 auf Beobachtungs- bzw. Visualisierungsfunktionen eingeschränkt. Bei einer rein drahtlosen Anbindung (Wireless-Mode) des Handbediengerätes 9 an das Steuerungssystem 1 wäre zwar die Funktionalität eines Sicherheitsschaltelementes 15 theoretisch ebenso implementierbar, der erforderliche technische Aufwand zur Erzielung einer möglichst hohen Verfügbarkeit bei gleichzeitiger Funktionssicherheit eines drahtlos eingekoppelten Sicherheitsschaltelementes 15 ist jedoch relativ hoch und damit komplex bzw. kostenintensiv. Demnach wird beim angegebenen Steuerungssystem 1 davon abgesehen, die Funktionalität des Sicherheitsschaltelementes 15 drahtlos in das Steuerungssystem 1 einzubinden und wird stattdessen eine "Hybrid-Funktion" bzw. eine "Semi-Wireless-Funktionalität" des Handbediengerätes 9 bereitgestellt, wobei die Umschaltung zwischen "Wireless-Mode" und "Cable-Mode" - und umgekehrt - unter anderem durch die interne Steuervorrichtung 10 kontrolliert bzw. reguliert ist.

Das zumindest eine von einer Bedienperson 11 betätigbare Sicherheitsschaltelement 15 am Handbediengerät 9 kann durch einen sogenannten Not-Aus-Schalter und/oder einen dreistufigen Zustimmtaster mit sogenannter Panik-Schaltstellung gebildet sein. Ein solches Sicherheitsschaltelement 15 ist - wie an sich bekannt - für die Ausführung und/oder Beendigung von potentiell sicherheitskritischen Steuerkommandos oder Bewegungsabläufen der technischen Anlage 2 vorgesehen.

Das wenigstens eine Sicherheitsschaltelement 15 ist in wenigstens einen elektrischen Sicherheitsschaltkreis 19 des Steuerungssystems 1 bzw. der technischen Anlage 2 eingebunden. Um einschlägigen Normen zu entsprechen, kann dieser Sicherheitsschaltkreis 19 zweikreisig redundant ausgeführt sein. Bei relativ niedrigen Sicherheitsanforderungen kann er jedoch auch einkreisig ausgeführt sein. Der Sicherheitsschaltkreis 19 ist im Ruhe- bzw. Normalzustand geschlossen, insbesondere als ununterbrochene, elektrische Leitungsbahn bzw. als Sicherheitsschleife ausgeführt. Beim Eintreten eines potentiell gefahrbringenden Zustandes ist der Sicherheitsschaltkreis 19 in einen unterbrochenen bzw. geöffneten Zustand überführbar. Dies erfolgt durch Betätigung bzw. Aktivierung von wenigstens einem der Sicherheitsschaltelemente 15. Ein solches von einer Bedienperson 11 bei Bedarf betätigbares Sicherheitsschaltelement 15 umfasst wenigstens einen, vorzugsweise zwei redundant und zwangsöffnend ausgeführte Öffner-Kontakte. Typischerweise sind mehrere an günstig erreichbaren Positionen der technischen Anlage 2 verteilt angeordnete Sicherheitsschaltelemente 15 in Form von sogenannten Not-Aus-Schaltern vorgesehen. Im geöffneten bzw. unterbrochenen Zustand von wenigstens einem der Sicherheitsschaltkreise 19 ist eine Abschaltung von potentiell gefahrbringenden Bewegungen oder Abläufen der technischen Anlage 2 vorgesehen, oder es wird ein sicherer Zustand einer technischen Anlage 2 herbeigeführt, wenn der zumindest eine Sicherheitsschaltkreis 19 via wenigstens ein Sicherheitsschaltelement 15 aktiviert wird, insbesondere in den unterbrochenen Zustand überführt wird.

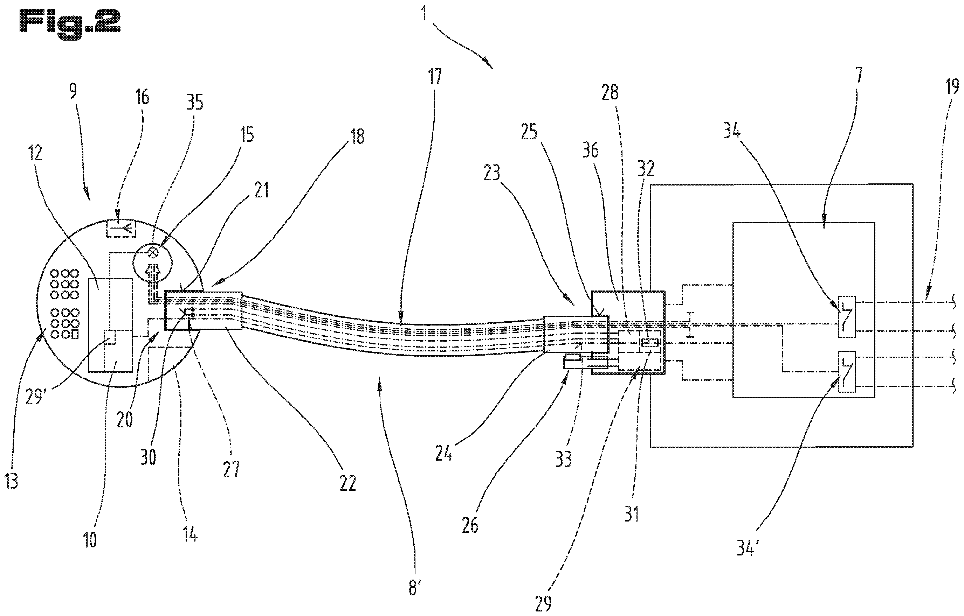

Wie am besten aus einer Zusammenschau der Fig. 1 und 2 ersichtlich ist, weist die kabelgebundene, steuerungstechnische Kommunikationsschnittstelle 18 eine kontaktbehaftete Steckschnittstelle 20 am Handbediengerät 9 auf. Mittels dieser Steckschnittstelle 20 kann die Kabelverbindung zwischen dem Handbediengerät 9 und dem Steuerungssystem 1 bzw. einer der Steuervorrichtungen 7 bedarfsweise aufgebaut und aufgehoben werden. Diese Steckschnittstelle 20 umfasst ein erstes Kupplungselement 21, beispielsweise eine Steckbuchse, am Handbediengerät 9, insbesondere an dessen Gehäuse, und ein gegenüber dem ersten Kupplungselement 21 bedarfsweise an- und abkuppelbares zweites Kupplungselement 22, welches mit dem ersten Kupplungselement 21 korrespondiert. Das zweite Kupplungselement 22, welches in Art eines Steckers ausgeführt sein kann, ist dabei an einem der beiden Enden des Verbindungskabels 17 ausgeführt.

Entsprechend einer praktikablen Ausführungsform kann vorgesehen sein, dass auch das zweite Ende des Verbindungskabels 17, insbesondere das vom Handbediengerät 9 fernliegende Ende des Verbindungskabels 17, bedarfsweise an- und abkuppelbar ausgeführt ist. Insbesondere kann eine zweite Steckschnittstelle 23 zum bedarfsweisen, werkzeuglos ausführbaren An- und Abstecken gegenüber dem Steuerungssystem 1, insbesondere gegenüber wenigstens einer der stationären Steuervorrichtungen 7, vorgesehen sein. Die zweite Steckschnittstelle 23 umfasst hierzu - wie an sich bekannt - einen Kabelstecker 24 am Verbindungskabel 17 und wenigstens eine damit korrespondierende Steckbuchse 25 an geeigneten Positionen des Steuerungssystems 1 bzw. an den diversen stationären Steuervorrichtungen 7. Sofern wenigstens eine anlagenseitige Steckschnittstelle 23 vorgesehen ist, so ist diese vorzugsweise ebenso wie die geräteseitige Steckschnittstelle 20 zum Handbediengerät 9 werkzeuglos betätigbar. Festzuhalten ist in diesem Zusammenhang, dass zumindest die der technischen Anlage 2 nächstliegende Steckschnittstelle 23 auch permanent, insbesondere unlösbar, ausgeführt sein kann, indem das Verbindungskabel 17 direkt an die jeweilige Steuervorrichtung 7 angeschlossen und unlösbar damit verbunden ist.

Sofern zumindest eine zweite Steckschnittstelle 23 implementiert ist, kann vorgesehen sein, dass an der stationären Steuervorrichtung 7 bzw. an einer entsprechenden Koppelstelle ein Kopplungszustands-Detektierungsmittel 26 zur automatisierten Erfassung des Vorhandenseins oder Nicht-Vorhandenseins des Kabelsteckers 24 an der Steckschnittstelle 23 vorgesehen ist.

Um das Steuerungssystem 1 zu verbessern bzw. um den Betrieb der technischen Anlage 2 bzw. des Steuerungssystems 1 zu optimieren, ist unmittelbar am bzw. im zweiten Kupplungselement 22 und/oder in unmittelbarer Nähe zum zweiten Kupplungselement 22, insbesondere am oder im nächstliegend zugeordneten Endabschnitt des Verbindungskabels 17, wenigstens ein elektronisch bzw. sensorisch erfassbares Abschlusskennzeichen 27 ausgebildet. Dieses Abschlusskennzeichen 27 ist hinsichtlich seines Vorhandenseins bzw. hinsichtlich seiner Charakteristik oder Eigenart elektrotechnisch bzw. elektronisch erfassbar und somit automatisiert detektierbar. Hierzu ist ein elektronisches Abschlusskennzeichen-Detektierungsmittel 28 vorgesehen. Dieses Abschlusskennzeichen-Detektierungsmittel 28 kann Bestandteil einer software- und/oder hardwaretechnisch implementierten Überwachungselektronik 29 im Steuerungssystem 1 bzw. in wenigstens einer der stationären Steuervorrichtungen 7 sein. Typischerweise ist das Abschlusskennzeichen-Detektierungsmittel 28 bzw. eine entsprechende Überwachungselektronik 29 extern bzw. abseits der Steuervorrichtung 10 des Handbediengerätes 9 implementiert.

Mittels diesem Abschlusskennzeichen-Detektierungsmittel 28 kann automatisiert erfasst werden, ob das Verbindungskabel 17 mit einiger Wahrscheinlichkeit in einem ordnungs- bzw. plangemäßen Zustand vorliegt, insbesondere ob die plangemäßen Leitungsverbindungen bis zum zweiten Kupplungselement 22 des Verbindungskabels 17 höchstwahrscheinlich vorliegen. Für den Fall, dass dieses Abschlusskennzeichen 27 nicht oder in einer nicht ordnungsgemäßen Charakteristik erfasst wird, wird seitens der Überwachungselektronik 29 bzw. seitens des Abschlusskennzeichen-Detektierungsmittels 28 davon ausgegangen, dass das Verbindungskabel 17 beschädigt, durchtrennt, teilweise durchtrennt, oder aus anderweiten Gründen nicht verfügbar ist und somit ein nicht plangemäßer, gegebenenfalls sicherheitskritischer Zustand vorliegt. Insbesondere kann dadurch vom Steuerungssystem 1 bzw. von wenigstens einer der Steuervorrichtungen 7 automatisiert oder teilautomatisiert erkannt werden, ob eine plangemäße Verbindung über das Verbindungskabel 17 ausgehend von der stationären Steuervorrichtung 7 in Richtung zum Handbediengerät 9 - und umgekehrt - vorliegt bzw. voraussichtlich aufgebaut werden kann und ob im Gefahrenfall eine sichere Stillsetzung bzw. Not-Aus-Einleitung über das Sicherheitsschaltelement 15 am Handbediengerät vorgenommen werden kann. Ein wesentlicher Effekt dieser Maßnahme liegt jedoch darin, dass dadurch in einfacher und zuverlässiger Art und Weise zwischen einer bewussten Auftrennung der Kommunikationsverbindung 8' über das Verbindungskabel 17 und einer störungsbedingten Unterbrechung, beispielsweise einer unfallbedingten Durchtrennung des Verbindungskabels 17 oder einem Adernbruch, automatisiert unterschieden werden kann.

Das Abschlusskennzeichen 27 ist dabei als Kennzeichen bzw. als Rückmeldungselement an dem zum Handbediengerät 9 zuordenbaren Ende des Verbindungskabels 17 zu verstehen. Im einfachen Fall ist das elektronisch bzw. sensorisch erfassbare Abschlusskennzeichen 27 durch einen elektrischen Verbindungsbügel 30 oder durch einen definierten, ohmschen Widerstand gebildet. Ein entsprechendes Abschlusskennzeichen 27 kann dabei zwischen zwei Adern des Verbindungskabels 17, oder alternativ zwischen einer Ader und einer elektromagnetischen Abschirmung, insbesondere einem Schirmungsgeflecht oder einer Schirmungsfolie, des Verbindungskabels 17 angeschlossen sein. Der Verbindungsbügel 30 bzw. das Abschlusskennzeichen 27 kann dabei als elektrische Brücke fungieren.

Das automatisiert bzw. elektrotechnisch detektierbare Abschlusskennzeichen 27 kann aber auch durch wenigstens ein elektrisches Bauteil mit frequenzabhängigen oder nicht linearen Eigenschaften, beispielsweise durch Induktivitäten bzw. Kapazitäten, insbesondere durch elektrische Filter, gebildet sein. Alternativ ist auch eine aktive Sendevorrichtung für elektrische Signale denkbar, welche an einer Ader oder einer elektromagnetischen Abschirmung des Verbindungskabels 17 angeschlossen ist. Beim Empfangen adäquater Sende- bzw. Antwortsignale, welche von einem entsprechenden Abschlusskennzeichen 27 ausgesandt werden, kann von der Überwachungselektronik 29, insbesondere vom Abschlusskennzeichen-Detektierungsmittel 28 davon ausgegangen werden, dass die Kabelverbindung ausgehend von der Steuervorrichtung 7 in Richtung zum zweiten Kupplungselement 22 am Verbindungskabel 17 in Ordnung ist und somit von einem ordnungsgemäßen Systemzustand ausgegangen werden kann. Zur Erhöhung der Sicherheit kann auch eine redundante Anordnung zweier oder mehrerer im Wesentlichen gleichartiger Abschlusskennzeichen 27 vorgesehen sein.

Zweckmäßig ist es dabei, wenn das jeweilige Abschlusskennzeichen 27 mit dem zweiten Kupplungselement 22 bzw. mit dem nächstliegend zugeordneten Ende des Verbindungskabels 17 permanent bzw. grundsätzlich unlösbar verbunden ist. Insbesondere ist vorgesehen, dass das jeweilige Abschlusskennzeichen 27 für eine Bedienperson 11 bzw. für einen standardmäßigen Anwender nicht ablösbar am bzw. im zweiten Kupplungselement 22 angeordnet ist oder dauerhaft mit dem Verbindungskabel 17 verbunden ist. Dies kann beispielsweise durch Löt- oder Klemmverbindungen oder durch grundsätzlich unzugängliche Schraubverbindungen erfolgen. Dadurch ist gewährleistet, dass in üblichen bzw. standardmäßigen Anwendungsfällen ein Abnehmen bzw. Ablösen des Abschlusskennzeichens 27 von jenem Endabschnitt des Verbindungskabels 17, welcher zur bedarfsweisen An- und Abkopplung gegenüber dem Handbediengerät 9 vorgesehen ist, unterbunden ist.

Das Abschlusskennzeichen 27 ist vorzugsweise derart implementiert, dass es ausgehend von zumindest einer der stationären Steuervorrichtungen 7 bzw. von der implementierten Überwachungselektronik 29, insbesondere mittels dem Abschlusskennzeichen-Detektierungsmittel 28, auch dann erfassbar ist, wenn die kontaktbehaftete Steckschnittstelle 20 zwischen dem Verbindungskabel 17 und dem Handbediengerät 9 getrennt bzw. inaktiv ist. Somit ist das Abschlusskennzeichen 27 auch dann aktiv bzw. detektierbar, wenn das zweite Kupplungselement 22 vom Handbediengerät 9 abgezogen ist. Das heißt, dass die kontaktbehaftete Schnittstelle 20 getrennt sein kann und dabei das Abschlusskennzeichen 27 weiterhin ermittelbar ist, wenn die Leitungsverbindungen zwischen der Steuervorrichtung 7 und dem Kupplungselement 22 intakt sind bzw. zumindest die jeweiligen Adern, an welche das Abschlusskennzeichen 27 angeschlossen ist, in Ordnung sind. Das jeweilige passiv oder aktiv wirkende Abschlusskennzeichen 27 ist demnach auch dann detektierbar, wenn das Verbindungskabel 17 vom Handbediengerät 9 abgesteckt ist bzw. abgesteckt wurde und außerdem ein erwartungsgemäß ordnungs- bzw. plangemäßer Funktionszustand des Verbindungskabels 17 bzw. des zweiten Kupplungselementes 22 und/oder einer allfällig ausgebildeten zweiten Steckschnittstelle 23 vorliegt.

In Kombination oder zusätzlich zum genannten Abschlusskennzeichen-Detektierungsmittel 28 umfasst das Steuerungssystem 1 bzw. wenigstens eine der stationären Steuervorrichtungen 7, insbesondere die implementierte Überwachungselektronik 29, ein Handbediengerät-Detektierungsmittel 31. Dieses Handbediengerät-Detektierungsmittel 31 dient zur Erfassung des Vorliegens oder Nicht-Vorliegens einer steuerungstechnischen Anbindung eines Handbediengerätes 9 an das Steuerungssystem 1 bzw. an eine der stationären Steuervorrichtungen 7. Das Handbediengerät-Detektierungsmittel 31 kann dabei softwaretechnisch und/oder hardwaretechnisch implementiert sein und dabei entweder in der Steuervorrichtung 7 bzw. in einer entsprechenden Überwachungselektronik 29 ausgeführt sein.

Das Handbediengerät-Detektierungsmittel 31 kann in einfacher Art und Weise durch eine Strommessung erfolgen, insbesondere durch eine Bestimmung des elektrischen Energieverbrauches umgesetzt sein. Alternativ oder in Kombination dazu kann das Handbediengerät-Detektierungsmittel 31 auch durch ein softwaretechnisches Mittel definiert sein, welches die daten- bzw. signaltechnische Kommunikation via das Verbindungskabel 17 evaluiert bzw. beobachtet. In Fällen, in denen der elektrische Energieverbrauch bzw. die datentechnische Kommunikation über das Verbindungskabel 17 einen gewissen Schwellwert unterschreitet bzw. zu Null wird, kann seitens des Handbediengerät-Detektierungsmittels 31 davon ausgegangen werden, dass am zweiten Kupplungselement 22 kein Handbediengerät 9 angeschlossen ist. Insbesondere kann mit einem derartigen Handbediengerät-Detektierungsmittel 31 erkannt werden, ob die zweite Steckschnittstelle 20 getrennt wird bzw. wurde, insbesondere ob das zweite Kupplungselement 22 vom Handbediengerät 9 gelöst wurde, indem es von dem entsprechenden Kupplungselement 21 entfernt wurde.

Eine vorzugsweise bei den einzelnen Koppelstellen, insbesondere in den Steuervorrichtungen 7 implementierte Strommesseinheit 32 ist dabei entweder zur Messung oder zur grundsätzlichen Detektierung eines über eine Versorgungsader 33 des Verbindungskabels 17 geleiteten elektrischen Stromes vorgesehen. Dabei kann von der Strommesseinheit 32 nur dann das Vorliegen eines Stromflusses bzw. eines nennenswerten Stromflusses festgestellt werden, wenn das Handbediengerät 9 ordnungsgemäß an das Steuerungssystem 1 angeschlossen ist, insbesondere wenn das Kupplungselement 22 am Verbindungskabel 17 ordnungsgemäß mit dem korrespondierenden Kupplungselement 21 am Handbediengerät 9 gekoppelt wurde. Bei einer von der Bedienperson 11 vorgenommenen Auftrennung der entsprechenden Steckschnittstelle 20 wird der Stromfluss über die Versorgungsader 33 zu Null oder nahezu Null und kann so auf eine Aufhebung der Verbindung zum Handbediengerät 9 Rückschluss gezogen werden.

Wesentlich ist dabei, dass durch eine kombinatorische Bewertung der Ergebnisse des Abschlusskennzeichen-Detektierungsmittels 28 und des Handbediengerät-Detektierungsmittels 31 eine relativ zuverlässige Unterscheidung zwischen einem bewusst bzw. gewollt abgesteckten Handbediengerät 9 und einer durch Störungen verursachten Abtrennung bzw. Beschädigung des Verbindungskabels 17 unterschieden werden kann.

So ist das Steuerungssystem 1 entsprechend einer zweckmäßigen Ausführung derart ausgebildet, dass die jeweilige stationäre Steuervorrichtung 7 bzw. die in der Steuervorrichtung 7 implementierte Überwachungselektronik 29 bei Erfassung eines Nicht-Vorliegens eines Handbediengerätes 9, insbesondere bei einem Wechsel von einem Vorliegen zu einem Nicht-Vorliegen einer steuerungstechnischen Anbindung eines Handbediengerätes 9 und bei gleichzeitiger Erfassung eines Abschlusskennzeichens 27 eine von einer Bedienperson 11 bewusst bzw. aktiv vorgenommene Auftrennung der kontaktbehafteten Steckschnittstelle 20 am Handbediengerät 9 automatisiert erkennt bzw. auswertungstechnisch davon ausgeht. Demzufolge wird von der stationären Steuervorrichtung 7 bzw. einer entsprechenden Überwachungselektronik 29 als Ersatz zu dem abgekoppelten oder fortan unwirksamen Sicherheitsschaltelement 15 am abzukoppelnden bzw. soeben abgekoppelten Handbediengerät 9 eine Überbrückung des Sicherheitsschaltkreises 19 im Zuge des Absteckens des Handbediengerätes 9 vorgenommen. Das heißt, dass beim Vorliegen der besagten Fallzustände das Steuerungssystem 1 derart agiert bzw. programmiert ist, dass der Sicherheitsschaltkreis 19 zum Beispiel an der Ankoppelstelle des Handbediengerätes 9 unmittelbar in den geschlossenen Zustand überführt wird und somit ein unbeabsichtigtes Stillsetzen der technischen Anlage 2 aufgrund des gewollten bzw. bewussten Absteckens des Handbediengerätes 9 unterbunden wird. Insbesondere kann vorgesehen sein, dass das Steuerungssystem 1 bei den genannten Fallzuständen zur Umschaltung von zumindest einem Ersatz- bzw. Parallelkontakt 34, 34' zu dem Sicherheitsschaltelement 15 am abgekoppelten Handbediengerät 9 vorgesehen ist. Insbesondere kann dabei vorgesehen sein, dass bei einer solchen als bewusst bzw. plangemäß erkannten Abkopplung des Handbediengerätes 9, in welchem kein Not- bzw. Gefahrenzustand und auch kein Störungszustand am Verbindungskabel 17 vorliegt, die als Öffner-Kontakte ausgeführten Ersatz- bzw. Parallelkontakte 34, 34' in den Ruhezustand, das heißt in den geschlossenen Zustand überführt werden, um eine ungewollte Stillsetzung der technischen Anlage 2 bzw. von Anlagenkomponenten 3 zu vermeiden. Diese ersatzweise Überbrückung des Sicherheitsschaltkreises 19 durch die Steuervorrichtung 7 bzw. durch die Überwachungselektronik 29 und die damit einhergehende Fortführung des elektrisch geschlossenen Zustandes des Sicherheitsschaltkreises 19 ist insbesondere dann gegeben, wenn das Sicherheitsschaltelement 15 am Handbediengerät 9 unmittelbar vor dem Abstecken des Verbindungskabels 17 von dem Handbediengerät 9 in seinem Ruhezustand vorgelegen ist, also nicht betätigt war.

Umgekehrt würde ein solcher Ersatz- bzw. Parallelkontakt 34, 34' im Sicherheitsschaltkreis 19 in den geöffneten Zustand versetzt werden bzw. im geöffneten Zustand verbleiben, wenn das Sicherheitsschaltelement 15 am Handbediengerät 9 betätigt wurde bzw. war, bevor das Verbindungskabel 17 abgesteckt wird. Dieser Abschaltzustand bleibt in diesem Fall also auch dann erhalten, wenn die Bedienperson 11 das Handbediengerät 9 vom Verbindungskabel 17 abtrennt, insbesondere das zweite Kupplungselement 22 vom Gehäuse des Handbediengerätes 9 absteckt bzw. vom ersten Kupplungselement 21 abzieht.

Es wird ausdrücklich darauf hingewiesen, dass das Abschlusskennzeichen-Detektierungsmittel 28 und das Kopplungszustands-Detektierungsmittel 26 integraler Bestandteil einer entsprechenden Überwachungselektronik 29 bzw. der jeweiligen Steuervorrichtung 7 sein kann. Die entsprechenden elektronischen Detektierungsmittel können dabei hard- und softwaretechnisch umsetzt werden, aber auch überwiegend softwaretechnisch ausgeführt sein.

Weiters kann es zweckmäßig sein, wenn das Abschlusskennzeichen-Detektierungsmittel 28 bzw. die dementsprechende Überwachungselektronik 29 zur fortlaufenden, periodischen, ereignisabhängigen oder stochastischen Detektierung des Vorliegends von systemkompatiblen Abschlusskennzeichen 27 ausgebildet ist. Insbesondere soll dabei in regelmäßigen oder unregelmäßigen Abständen automatisiert überprüft werden, ob ein kompatibles Abschlusskennzeichen 27 vorliegt oder ein solches nicht erfassbar ist. Wesentlich ist in diesem Zusammenhang, dass die stationäre Steuervorrichtung 7 bzw. die Überwachungselektronik 29 zumindest zur Signalisierung einer Störungsmeldung vorgesehen ist, oder den jeweiligen Sicherheitsschaltkreis 19 in den Abschalt- bzw. Not-Aus-Zustand versetzt, wenn das Handbediengerät-Detektierungsmittel 31 zwar die Anbindung eines Handbediengerätes 9 erkennt, mittels dem Abschlusskennzeichen-Detektierungsmittel das Vorliegen eines Abschlusskennzeichens 27 jedoch nicht detektierbar ist. In einem solchen Fall liegen insbesondere Störungen vor, welche beispielsweise durch einen Kabelbruch oder einen Adernbruch im Verbindungskabel 17 hervorgerufen sein können. Alternativ oder in Kombination dazu sind dadurch inkompatible bzw. nicht vorgesehene Verbindungskabel 17 erkennbar.

Zweckmäßig ist es auch, wenn die zumindest eine stationäre Steuervorrichtung 7 bzw. die Überwachungselektronik 29 zur unmittelbaren Beendigung von dessen Überbrückungszustand in Bezug auf den Sicherheitsschaltkreis 19 und zur sofortigen funktionalen bzw. ersatzweisen Einbindung des zumindest einen Sicherheitsschaltelementes 15 an einem soeben bzw. augenblicklich angesteckten Handbediengeräts 9 in den Sicherheitsschaltkreis 19 ausgebildet ist, wenn mittels dem Handbediengerät-Detektierungsmittel 31 die Anbindung eines Handbediengerätes 9 erfasst ist und zugleich mittels dem Abschlusskennzeichen-Detektierungsmittel 28 ein Abschlusskennzeichen 27 erfasst ist. Dieser Vorgang ist insbesondere beim Anstecken eines Handbediengerätes 9 mit einem unbetätigten, im Ruhezustand vorliegenden Sicherheitsschaltelement 15 zweckmäßig.

Wenn dann das zumindest eine Sicherheitsschaltelement 15 am Handbediengerät 9 über diskrete Leitungsverbindungen in den Sicherheitsschaltkreis 19 funktional eingebunden ist, indem das Handbediengerät 1 mittels dem Verbindungskabel 17 an das Steuerungssystem 1 angeschlossen ist, so ist das Handbediengerät 9 zur Ausführung oder Beeinflussung von potentiell gefahrbringenden Steuerungskommandos verwendbar. Insbesondere bei Anbindung des Handbediengerätes 9 über das Verbindungskabel 17 ist vorgesehen, dass mittels dem Handbediengerät 9 auch eine Beobachtung oder Ausführung von potentiell sicherheitskritischen Abläufen bzw. Steuerungskommandos ermöglicht ist. Dabei ist das wenigstens eine Sicherheitsschaltelement 15 des Handbediengerätes 9 unter Heranziehung des Verbindungskabels 17 funktionswirksam in den Sicherheitsschaltkreis 19 der technischen Anlage 2 eingebunden und dessen Funktionswirksamkeit vergleichsweise zuverlässig verfügbar. Demnach ist in einem sogenannten "Kabelmodus" (Cable-Mode), in welchem das Handbediengerät 9 mittels dem Verbindungskabel 17 an das Steuerungssystem 1 angebunden ist und somit auch das wenigstens eine Sicherheitsschaltelement 15 über Adern des Verbindungskabels 17 in das Steuerungssystem 1 eingebunden ist, die Ausführung bzw. Kontrolle von potentiell gefahrbringenden Steuerungsaufgaben ermöglicht. Demgegenüber kann das Handbediengerät 9 bzw. das Steuerungssystem 1 auch in einem reinen "Funkmodus" (Wireless-Mode) betrieben werden, in welchem das Verbindungskabel 17 abgesteckt ist bzw. nicht vorhanden ist. Diese relativ uneingeschränkte Mobilität im "Wireless-Mode" trägt einerseits zu einer besonders guten Einsehbarkeit der technischen Anlage 2 für die Bedienperson 11 bei und ermöglicht andererseits aber ebenso die Einflussnahme auf Betriebszustände oder die Überprüfung von Betriebszuständen auf große Entfernung, d.h. ohne dass die Bedienperson unmittelbar vor Ort sein muss. In diesem "Wireless-Mode" in welchem das Handbediengerät 9 ausschließlich mittels der drahtlosen Kommunikationsschnittstelle 16 in das Steuerungssystem 1 eingebunden ist, sind die Funktionen das Handbediengerätes 1 bevorzugt auf datentechnische Beobachtungsfunktionen bzw. auf sicherheitstechnisch unkritische Parametrierungsfunktionen beschränkt. Dadurch können Sicherheit und Zuverlässigkeit des Steuerungssystems 1 optimiert werden bzw. kann dadurch ein hoher Sicherheitsstandard aufgebaut werden.

In diesem Zusammenhang kann es auch zweckmäßig sein, wenn das Steuerungssystem 1 bzw. die Steuervorrichtung 10 eine vorliegende Funktionsverfügbarkeit und/oder eine vorliegende Unwirksamkeit des zumindest einen Sicherheitsschaltelementes 15 am Handbediengerät 9 für die Bedienperson 11 bzw. für sonstige Personen augenscheinlich erkennbar macht. Zweckmäßig ist es dabei, wenn das Steuerungssystem 1 eine vorliegende Funktionsverfügbarkeit des zumindest einen Sicherheitsschaltelementes 15 am Handbediengerät 9 durch Aktivierung einer Beleuchtung 35 des zumindest einen Sicherheitsschaltelementes 15 signalisiert. Vorzugsweise ist diese Beleuchtung 35 im Inneren des Sicherheitsschaltelementes 15 integriert und sind dabei zumindest Teilabschnitte des Sicherheitsschaltelementes 15 durchscheinend bzw. lichtdurchlässig ausgeführt. Zweckmäßig ist es dabei, wenn das Sicherheitsschaltelement 15 bzw. dessen Gehäuseabschnitte im unbeleuchteten und somit inaktiven Zustand eine dunkle Erscheinung besitzen bzw. schwach lichtdurchlässige Gehäuseabschnitte aufweisen und beispielsweise ein milchig-graues Erscheinungsbild haben. Demgegenüber ist das Sicherheitsschaltelement 15 in seinem funktionsbereiten Zustand in seiner Erscheinung andersfarbig, insbesondere heller bzw. von innen beleuchtet.

Zweckmäßig ist es dabei, wenn die in Abhängigkeit der Funktionsverfügbarkeit bzw. Funktionsunwirksamkeit des Sicherheitsschaltelementes 15 aktivier- und deaktivierbare Beleuchtung 35 zur Abstrahlung von vorzugsweise rotfarbenem Licht ausgebildet ist, wenn das Sicherheitsschaltelement 15 funktionsbereit ist, insbesondere zur Abschaltung oder Beendigung von potentiell gefahrbringenden Steuerungs- bzw. Bewegungsprozessen bereit ist, also eine Abschaltbereitschaft für die technische Anlage 2 bzw. für Anlagenkomponenten 3 vorliegt. Insofern ist das Steuerungssystem 1 bzw. eine Überwachungselektronik 29' im Handbediengerät 9 zur zuverlässigen Deaktivierung der Beleuchtung 35 des Sicherheitsschaltelementes 15 ausgebildet, wenn das Handbediengerät 9 ausschließlich über die drahtlose Kommunikationsschnittstelle 16, also über eine Funkanbindung, in das Steuerungssystem 1 eingebunden ist. Die Überwachungselektronik 29' im Handbediengerät 9, welche software- und/oder hardwaretechnisch implementiert sein kann, kann auch zur situativen Aktivierung der Beleuchtung 35, welche zumindest eine LED umfassen kann, vorgesehen sein.

Wie bereits erläutert, kann das Steuerungssystem 1 verteilt angeordnete Steuervorrichtungen 7 umfassen, wie dies in Fig. 1 beispielhaft veranschaulicht ist. Diese Steuervorrichtungen 7 sind für die Umsetzung primärer Steuerungsaufgaben innerhalb der technischen Anlage 2 vorgesehen. Zweckmäßig ist es dabei, wenn das vorgeschlagene Steuerungssystem 1 wenigstens eine von den eigentlichen Steuervorrichtungen 7 baulich abgesetzte, insbesondere gesondert ausgebildete Anschluss-Steuereinheit 36 umfasst. Die wenigstens eine Anschluss-Steuereinheit 36 ist dabei mit wenigstens einer der Steuervorrichtungen 7 leitungsverbunden und dient zur funktionalen Einbindung des Handbediengerätes 9 in das Steuerungssystem 1. Zweckmäßig ist es, wenn an jeder Ankoppelstelle zum Einbinden eines Handbediengerätes 9 in das Steuerungssystem 1 eine Anschluss-Steuereinheit 36 vorgesehen ist. Die Anschluss-Steuereinheit 36 kann dabei insbesondere als eigenständige Gehäuseeinheit in Art einer Anschluss-Box ausgeführt sein. Zweckmäßig ist es dabei, wenn in dieser Anschluss-Steuereinheit 36 die Überwachungselektronik 29 umgesetzt ist, insbesondere das Abschlusskennzeichen-Detektierungsmittel 28 und/oder das Handbediengerät-Detektierungsmittel 31 und/oder das Kopplungszustands-Detektierungsmittel 26 implementiert ist.

Ein zweckmäßiger Funktionsablauf im Steuerungssystem 1 im Zuge des Absteckens des Verbindungskabels 17 während des laufenden Betriebs (hot-unplugging) stellt sich wie folgt dar: Das Abschlusskennzeichen 27 im zweiten Kupplungselement 22, beispielsweise ein Drahtbügel, wird von der Anschluss-Steuereinheit 36 bzw. der Überwachungselektronik 29 erkannt. Wenn das Handbediengerät 9 an seiner Steckschnittstelle 20 vom Verbindungskabel 17 abgesteckt wird, treten folgende Zustände ein: Abschlusskennzeichen-Detektierungsmittel 28 = "True", Kopplungszustands-Detektierungsmittel 26 = "True" und Handbediengerät-Detektierungsmittel 31 = "False" ein. Die entsprechende lokale Steuervorrichtung 7 bzw. die Anschluss-Steuereinheit 36 und/oder die Überwachungselektronik 29 erkennt so das geräteseitige, bewusste Abstecken des Verbindungskabels 17 und geht hinsichtlich des Sicherheitsschaltkreises 19 in den Überbrückungszustand, um eine ungewollte Abschaltung der technischen Anlage 2 zu vermeiden. Ein allfälliger Kabelbruch würde dabei ebenso erkannt werden: Abschlusskennzeichen-Detektierungsmittel 28 = "False", Handbediengerät-Detektierungsmittel 31 = "False" und Kopplungszustands-Detektierungsmittel 26 = "True".

Ein Ansteckvorgang eines Handbediengerätes 9 während des laufenden Betriebs des Steuerungssystems 1 (hot-plugging) erfolgt zweckmäßigerweise wie folgt: Wenn sich die stationäre Steuervorrichtung 7 und/oder die Überwachungselektronik 29 bzw. die Anschluss-Steuereinheit 36 in Bezug den Sicherheitsschaltkreis 19 im Überbrückungszustand befindet und ein Handbediengerät 9 mit einem Sicherheitsschaltelement 15 angesteckt wird, erkennt das Steuerungssystem 1 dies wie folgt: Handbediengerät-Detektierungsmittel 31 = "True", Kopplungszustands-Detektierungsmittel 26 = "True" und Abschlusskennzeichen-Detektierungsmittel 27 = "True". Demzufolge wird der Überbrückungszustand sofort aufgehoben und das Sicherheitsschaltelement 15 am Handbediengerät 9 zumindest funktional eingekoppelt bzw. galvanisch leitend in den Sicherheitsschaltkreis 19 eingebunden. Gegebenenfalls beginnt ein solches Sicherheitsschaltelement 15 zu leuchten, falls ein solches Sicherheitsschaltelement 15 mit aktivier- und deaktivierbarer Beleuchtung 35 am Handbediengerät 9 vorhanden ist. Damit kann dessen Funktionsverfügbarkeit klar signalisiert werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steuerungssystem | 26 | Kopplungszustands-Detektierungsmittel |
| 2 | Anlage | | |
| 3 | Anlagenkomponente | 27 | Abschlusskennzeichen |
| 4 | Industrieroboter | 28 | Abschlusskennzeichen-Detektierungsmittel |
| 5 | Bearbeitungsstation | | |
| 6 | Transportvorrichtung | 29, 29' | Überwachungselektronik |
| 7 | Steuervorrichtung | 29 | Verbindungsbügel |
| 8 | drahtlose Kommunikationsverbindung | 30 | Handbediengerät-Detektierungsmittel |
| 8' | kabelgebundene Kommunikations-verbindung | 31 | Strommesseinheit |
| | | 32 | Versorgungsader |
| 9 | Handbediengerät | 34, 34' | Ersatz- bzw. Parallelkontakt |
| 10 | Steuervorrichtung | 35 | Beleuchtung |
| 11 | Bedienperson | 36 | Anschluss-Steuereinheit |
| 12 | Ausgabeelement | | |
| 13 | Eingabeelement | | |
| 14 | Stromversorgungseinheit | | |
| 15 | Sicherheitsschaltelement | | |
| 16 | Kommunikationsschnittstelle (drahtlos) | | |
| 17 | Verbindungskabel | | |
| 18 | Kommunikationsschnittstelle (kabelgebunden) | | |
| 19 | Sicherheitsschaltkreis | | |
| 20 | Steckschnittstelle | | |
| 21 | erstes Kupplungselement | | |
| 22 | zweites Kupplungselement | | |
| 23 | zweite Steckschnittstelle | | |
| 24 | Kabel stecker | | |
| 25 | Steckbuchse | | |

## Patentansprüche

1. Steuerungssystem (1) für technische Anlagen (2), umfassend einen Sicherheitsschaltkreis (19),
wenigstens eine stationäre Steuervorrichtung (7) mit Ein- und Ausgangsschnittstellen zum Aufbau von Leitungsverbindungen zu einer zu steuernden technischen Anlage (2),
wenigstens ein von einer Bedienperson (11) tragbares und mobil verwendbares, elektronisches Handbediengerät (9) zur Beeinflussung und Beobachtung von steuerungstechnischen Abläufen und Zuständen des Steuerungssystems (1) respektive einer daran anbindbaren technischen Anlage (2),
welches Handbediengerät (9) eine drahtlose, steuerungstechnische Kommunikationsschnittstelle (16) und auch eine über ein Verbindungskabel (17) aufbaubare, steuerungstechnische Kommunikationsschnittstelle (18) aufweist, mit welchen Kommunikationsschnittstellen (16, 18) jeweils eine datentechnische Einbindung des Handbediengerätes (9) in das Steuerungssystem (1) ermöglicht ist,
wenigstens ein von einer Bedienperson (11) betätigbares Sicherheitsschaltelement (15) am Handbediengerät, welches Sicherheitsschaltelement (15) zumindest für eine Beendigung von potentiell sicherheitskritischen Steuerkommandos oder Bewegungsabläufen vorgesehen ist,
einen im Normalzustand geschlossenen Sicherheitsschaltkreis (19), welcher Sicherheitsschaltkreis (19) zur Abwehr eines Gefahrenzustandes in einen unterbrochenen oder geöffneten Zustand überführbar ist und zur Abschaltung von potentiell gefahrbringenden Bewegungen oder Abläufen einer angesteuerten technischen Anlage (2) oder zur Herbeiführung eines sicheren Zustandes in einer angesteuerten technischen Anlage (2) vorgesehen ist,
und wobei die kabelgebundene, steuerungstechnische Kommunikationsschnittstelle (18) eine kontaktbehaftete Steckschnittstelle (20) am Handbediengerät (9) umfasst, welche Steckschnittstelle (20) ein erstes Kupplungselement (21) am Handbediengerät (9) und ein gegenüber dem ersten Kupplungselement (21) bedarfsweise an- und abkuppelbares zweites Kupplungselement (22) aufweist, welches zweite Kupplungselement (22) am Verbindungskabel (17) ausgeführt ist,
**dadurch gekennzeichnet, dass**
unmittelbar im zweiten Kupplungselement (22) oder in unmittelbarer Nähe zum zweiten Kupplungselement (22) am oder im Verbindungskabel (17) wenigstens ein Abschlusskennzeichen (27) ausgebildet ist, welches Abschlusskennzeichen (27) von einem Abschlusskennzeichen-Detektierungsmittel (28) elektronisch erfassbar ist,
dass ein Handbediengerät-Detektierungsmittel (31) ausgebildet ist, welches zur Erfassung des Vorliegens oder Nicht-Vorliegens einer steuerungstechnischen Anbindung eines Handbediengerätes (9) an das Steuerungssystem (1) vorgesehen ist,
und dass das Steuerungssystem (1) bei Erfassung eines Wechsels von einem Vorliegen zu einem Nicht-Vorliegen einer steuerungstechnischen Anbindung eines Handbediengerätes (9) und bei gleichzeitiger Erfassung eines Abschlusskennzeichens (27) am entsprechenden Verbindungskabel (17) zu diesem abgekoppelten Handbediengerät (9) eine von einer Bedienperson (11) bewusst vorgenommene Auftrennung der kontaktbehafteten Steckschnittstelle (20) an diesem Handbediengerät (9) erkennt und daraufhin als Ersatz zu dem in der Folge unwirksamen Sicherheitsschaltelement (15) am abgekoppelten Handbediengerät (9) den letztgültigen Schaltzustand des Sicherheitsschaltelements (15) funktionsäquivalent in den Sicherheitsschaltkreis (19) einkoppelt, respektive zur Überbrückung des Sicherheitsschaltkreises (19) im Zuge des Absteckens des Handbediengerätes (9) ausgebildet ist, oder zur Umschaltung von zumindest einem Ersatz- bzw. Parallelkontaktes (34, 34') zu dem Sicherheitsschaltelement (15) am Handbediengerät (9) vorgesehen ist, sofern das Sicherheitsschaltelement (15) am abgekoppelten Handbediengerät (9) unmittelbar vor dem Abstecken des Verbindungskabels (17) vom Handbediengerät (9) in seinem nicht betätigten Zustand oder Ruhezustand vorgelegen ist.

2. Steuerungssystem nach Anspruch 1, **dadurch gekennzeichnet, dass** das Abschlusskennzeichen-Detektierungsmittel (28) zur fortlaufenden, periodischen oder ereignisabhängigen Detektierung von Abschlusskennzeichen (27) vorgesehen ist, und dass das Steuerungssystem (1) zur Signalisierung einer Störungsmeldung vorgesehen ist, wenn das Handbediengerät-Detektierungsmittel (31) die Anbindung eines Handbediengerätes (9) erkennt, vom Abschlusskennzeichen-Detektierungsmittel (28) das Vorliegen eines Abschlusskennzeichens (27) jedoch nicht detektierbar ist.

3. Steuerungssystem nach Anspruch 1 oder 2, **dadurch gekennzeichnet, dass** das Steuerungssystem (1) zur unmittelbaren Beendigung von dessen Überbrückungszustand in Bezug auf den Sicherheitsschaltkreis (19) und zur ersatzweisen, unmittelbaren Einbindung des zumindest einen Sicherheitsschaltelementes (15) an einem augenblicklich angesteckten Handbediengerät (9) in den Sicherheitsschaltkreis (19) des Steuerungssystems (1) ausgebildet ist, wenn mittels dem Handbediengerät-Detektierungsmittel (31) die Anbindung eines Handbediengerätes (9) erfasst ist und mittels dem Abschlusskennzeichen-Detektierungsmittel (28) ein Abschlusskennzeichen (27) erfasst ist.

4. Steuerungssystem nach einem der vorhergehenden Ansprüche, **dadurch gekennzeichnet, dass** das Abschlusskennzeichen (27) durch einen elektrischen Verbindungsbügel (30) oder einen ohmschen Widerstand zwischen zwei Adern des Verbindungskabels (17), oder alternativ zwischen einer Ader und einer elektromagnetischen Abschirmung des Verbindungskabels (17) gebildet ist.

5. Steuerungssystem nach einem der Ansprüche 1 bis 3, **dadurch gekennzeichnet, dass** das Abschlusskennzeichen (27) durch wenigstens ein elektrisches Bauteil mit frequenzabhängigen oder nichtlinearen Eigenschaften, oder durch eine Sendevorrichtung für elektrische Signale an einer Ader oder einer elektromagnetischen Abschirmung des Verbindungskabels (17) gebildet ist.

6. Steuerungssystem nach einem der vorhergehenden Ansprüche, **dadurch gekennzeichnet, dass** das Abschlusskennzeichen (27) mit dem zweiten Kupplungselement (22) oder dem Verbindungskabel (17) permanent verbunden ist.

7. Steuerungssystem nach einem der vorhergehenden Ansprüche, **dadurch gekennzeichnet, dass** das Abschlusskennzeichen (27) auch dann erfassbar oder aktiv ist, wenn die kontaktbehaftete Steckschnittstelle (20) getrennt und das Handbediengerät (9) vom Verbindungskabel (17) abgesteckt ist.

8. Steuerungssystem nach einem der vorhergehenden Ansprüche, **dadurch gekennzeichnet, dass** eine zweite Steckschnittstelle (23) zum bedarfsweisen, werkzeuglos ausführbaren An- und Abstecken eines Kabelsteckers (24) des Verbindungskabels (17) vorgesehen ist.

9. Steuerungssystem nach Anspruch 8, **dadurch gekennzeichnet, dass** ein Kopplungszustands-Detektierungsmittel (26) zur Erfassung des Vorhandenseins oder Nicht-Vorhandenseins des Kabelsteckers (24) an der zweiten Steckschnittstelle (23) vorgesehen ist.

10. Steuerungssystem nach einem der vorhergehenden Ansprüche, **dadurch gekennzeichnet, dass** das Steuerungssystem (1) verteilt angeordnete Steuervorrichtungen (7) umfasst, welche für die Umsetzung primärer Steuerungsaufgaben vorgesehen sind, und dass wenigstens eine von den Steuervorrichtungen (7) baulich abgesetzte, mit wenigstens einer Steuervorrichtung (7) leitungsverbundene Anschluss-Steuereinheit (36) zur Einbindung des Handbediengerätes (9) in das Steuerungssystem (1) ausgebildet ist.

11. Steuerungssystem nach Anspruch 10, **dadurch gekennzeichnet, dass** das Abschlusskennzeichen-Detektierungsmittel (28), das Handbediengerät-Detektierungsmittel (31) und das Kopplungszustands-Detektierungsmittel (26) in der Anschluss-Steuereinheit (36) implementiert sind.

12. Steuerungssystem nach einem der vorhergehenden Ansprüche, **dadurch gekennzeichnet, dass** das Handbediengerät (9) zur Ausführung oder Beeinflussung von potentiell gefahrbringenden Steuerungskommandos verwendbar ist, wenn das Handbediengerät (9) mittels dem Verbindungskabel (17) in das Steuerungssystem (1) eingebunden und das wenigstens eine Sicherheitsschaltelement (15) des Handbediengerätes (9) in den Sicherheitsschaltkreis (19) funktionswirksam eingebunden ist.

13. Steuerungssystem nach einem der vorhergehenden Ansprüche, **dadurch gekennzeichnet, dass** das Steuerungssystem (1) die Funktionen des Handbediengerätes (9) auf datentechnische Beobachtungsfunktionen oder auf sicherheitstechnisch unkritische Parametrierungsfunktionen beschränkt, wenn das Handbediengerät (9) ausschließlich mittels der drahtlosen Kommunikationsschnittstelle (16) in das Steuerungssystem (1) eingebunden ist.

14. Steuerungssystem nach einem der vorhergehenden Ansprüche, **dadurch gekennzeichnet, dass** das Steuerungssystem (1) eine vorliegende Funktionswirksamkeit des zumindest einen Sicherheitsschaltelementes (15) am Handbediengerät (9) durch Aktivierung einer Beleuchtung (35) des zumindest einen Sicherheitsschaltelementes (15) signalisiert.

15. Steuerungssystem nach Anspruch 14, **dadurch gekennzeichnet, dass** das Steuerungssystem (1) zur Deaktivierung der Beleuchtung (35) des Sicherheitsschaltelementes (15) ausgebildet ist, wenn das Handbediengerät (9) ausschließlich über die drahtlose Kommunikationsschnittstelle (16) in das Steuerungssystem (1) eingebunden ist.

## Claims

1. A control system (1) for technical installations (2), comprising a safety circuit (19),
at least one stationary control device (7) with input and output interfaces for establishing line connections to a technical installation (2) to be controlled,
at least one electronic hand-held terminal (9) portable and usable in a mobile manner by an operator (11) for influencing and observing control processes and states of the control system (1), and/or a technical installation (2) connectible thereto,
which hand-held terminal (9) has a wireless control communication interface (16) and also a control technology communication interface (18) which can be established via a connecting cable (17), wherein each of which communication interfaces (16, 18) make a data integration of the hand-held terminal (9) into the control system (1) possible,
at least one safety switching element (15) on the hand-held terminal that can be actuated by an operator (11), which safety switching element (15) is provided at least for a termination of potentially safety-critical control commands or motion sequences,
a safety circuit (19), which is closed in the normal state, which safety circuit (19) is transferable into an interrupted or open state for averting a hazardous state and is provided for termination of potentially dangerous motions or processes of a controlled technical installation (2) or for causing a safe state in a controlled technical installation (2),
and wherein the wired, control communication interface (18) comprises a contact-based plug-in interface (20) on the hand-held terminal (9), which plug-in interface (20) has a first coupling element (21) on the hand-held terminal (9) and a second coupling element (22) which can be coupled or decoupled as needed with respect to the first coupling element (21), which second coupling element (22) is formed on the connecting cable (17),
**characterized in that**
at least one termination indicator (27) is formed immediately in the second coupling element (22) or in immediate proximity to the second coupling element (22) on or in the connecting cable (17), which termination indicator (27) is electronically detectable by a termination indicator detection means (28),
that a hand-held terminal detection means (31) is formed, which is provided for detecting the presence or non-presence of a control connection of a hand-held terminal (9) to the control system (1),
and that the control system (1), upon detection of a change from a presence to a non-presence of a control connection of the hand-held terminal (9) and upon simultaneous detection of a termination indicator (27) on the corresponding connecting cable (17) to this decoupled hand-held terminal (9), recognizes a separation of the contact-based plug-in interface (20) intentionally carried out by an operator (11) on this hand-held terminal (9), and consequently, as a substitute for the subsequently ineffective safety switching element (15) on the decoupled hand-held terminal (9), couples the last valid switching state of the safety switching element (15) into the safety circuit (19) in a functionally equivalent manner, and/or is designed for bridging the safety circuit (19) as part of the unplugging of the hand-held terminal (9), or is provided for switching over from at least one substitute and/or parallel contact (34, 34') to the safety switching element (15) on the hand-held terminal (9), provided that the safety switching element (15) on the decoupled hand-held terminal (9) was present in its non-actuated state or non-operating state immediately before the unplugging of the connecting cable (17) from the hand-held terminal (9).

2. The control system according to claim 1, **characterized in that** the termination indicator detection means (28) is provided for the continuous, periodic or event-dependent detection of termination indicators (27) and that the control system (1) is provided for signaling an error message when the hand-held terminal detection means (31) recognizes the connection of a hand-held terminal (9) but the termination indicator detection means (28) cannot detect the presence of a termination indicator (27).

3. The control system according to claim 1 or 2, **characterized in that** the control system (1) is designed for immediate termination of its bridging state with respect to the safety circuit (19) and for substitute, immediate integration of the at least one safety switching element (15) on a presently plugged-in hand-held terminal (9) into the safety circuit (19) of the control system (1), when, by means of the hand-held terminal detection means (31), the connection of a hand-held terminal (9) is detected and, by means of the termination indicator detection means (28), a termination indicator (27) is detected.

4. The control system according to one of the preceding claims, **characterized in that** the termination indicator (27) is formed by an electric connecting jumper (30) or an ohmic resistor between two wires of the connecting cable (17), or alternatively, between one wire and an electromagnetic shielding of the connecting cable (17).

5. The control system according to one of claims 1 to 3, **characterized in that** the termination indicator (27) is formed by at least one electric component with frequency-dependent or non-linear properties, or by a transmitting device for electric signals on a wire or an electromagnetic shielding of the connecting cable (17).

6. The control system according to one of the preceding claims, **characterized in that** the termination indicator (27) is permanently connected to the second coupling element (22) or the connecting cable (17).

7. The control system according to one of the preceding claims, **characterized in that** the termination indicator (27) is detectable, even when the contact-based plug-in interface (20) is disconnected and the hand-held terminal (9) is unplugged from the control cable (17).

8. The control system according to one of the preceding claims, **characterized in that** a second plug-in interface (23) is provided for plugging and unplugging of a cable plug (24) of the connecting cable (17) as needed, executable in a tool-free manner.

9. The control system according to claim 8, **characterized in that** a coupling state detection means (26) for detecting the presence or non-presence of a cable plug (24) on the second plug-in interface (23) is provided.

10. The control system according to one of the preceding claims, **characterized in that** the control system (1) comprises control devices (7) arranged in a distributed manner, which are provided for executing primary control tasks, and that at least one terminal control unit (36), structurally detached from the control devices (7) and line-connected to at least one control device (7), is designed for integrating the hand-held terminal (9) into the control system (1).

11. The control system according to claim 10, **characterized in that** the termination indicator detection means (28), the hand-held terminal detection means (31) and the coupling state detection means (26) are implemented in the terminal control unit (36).

12. The control system according to one of the preceding claims, **characterized in that** the hand-held terminal (9) can be used to carry out or influence potentially dangerous control commands, when the hand-held terminal (9) is integrated, by means of the connecting cable (17), into the control system (1) and the at least one safety switching element (15) of the hand-held terminal (9) is integrated into the safety circuit (19) in a functionally effective manner.

13. The control system according to one of the preceding claims, **characterized in that** the control system (1) limits the functions of the hand-held terminal (9) to data observation functions or to parametrization functions that are uncritical in terms of safety, when the hand-held terminal (9) is integrated into the control system (1) exclusively by means of the wireless communication interface (16).

14. The control system according to one of the preceding claims, **characterized in that** the control system (1) signals a present functional effectiveness of the at least one safety switching element (15) on the hand-held terminal (9) by means of activation of an illumination (35) of the at least one safety switching element (15).

15. The control system according to claim 14, **characterized in that** the control system (1) is designed for deactivating the illumination (35) of the safety switching element (15), when the hand-held terminal (9) is integrated into the control system (1) exclusively by means of the wireless communication interface (16).

## Revendications

1. Système de commande (1) pour des installations techniques (2), comprenant
un circuit de sécurité (19),
au moins un dispositif de commande stationnaire (7) avec des interfaces d'entrée et de sortie pour l'établissement de liaisons par câbles avec une installation technique (2) à contrôler,
au moins un appareil de commande manuelle électronique (9) pouvant être porté et utilisé de manière mobile par un opérateur (11), pour le contrôle et la surveillance de processus et d'états de commande du système de commande (1) respectivement d'une installation technique (2) pouvant y être connecté,
cet appareil de commande manuelle (9) comprenant une interface de communication de commande (16) sans fil ainsi qu'une interface de communication de commande (18) pouvant être établie par l'intermédiaire d'un câble de liaison (17), ces interfaces de communication (16, 18) permettant chacune une intégration informatique de l'appareil de commande manuelle (9) dans le système de commande (1),
au moins un élément de commutation de sécurité (15) pouvant être actionné par un opérateur (11), sur l'appareil de commande manuelle, cet élément de commutation de sécurité (15) étant prévu au moins pour une terminaison d'instructions de commande ou de processus de déplacement potentiellement critiques pour la sécurité,
un circuit de sécurité (19) fermé dans l'état normal, ce circuit de sécurité (19) pouvant être mis, pour la prévention d'un état dangereux, dans un état interrompu ou ouvert et étant prévu pour la désactivation de mouvements ou de processus potentiellement dangereux d'une installation technique (2) contrôlée ou pour l'obtention d'un état sécurisé dans une installation technique (2) contrôlée,
et dans lequel l'interface de communication de commande filaire (18) comprend une interface enfichable à contact (20) sur l'appareil de commande manuelle (9), cette interface enfichable (20) comprenant un premier élément de couplage (21) sur l'appareil de commande manuelle (9) et un deuxième élément de couplage (22) pouvant être couplé et découplé, selon les besoins, par rapport au premier élément de couplage (21), ce deuxième élément de couplage (22) étant réalisé sur le câble de liaison (17), **caractérisé en ce que**
directement dans le deuxième élément de couplage (22) ou à proximité immédiate du deuxième élément de couplage (22) ou dans le câble de liaison (17) est réalisé au moins une caractéristique de déconnexion (27), cette caractéristique de déconnexion (27) pouvant être détecté électroniquement par un moyen de détection de caractéristique de déconnexion (28),
un moyen de détection d'appareil de commande manuelle (31) est prévu, qui est conçu pour la détection de la présence ou de l'absence d'une liaison technique de commande d'un appareil de commande manuelle (9) avec le système de commande (1),
et le système de commande (1), lors de la détection d'un changement d'une présence vers une absence d'une liaison technique de commande d'un appareil de commande manuelle (9) et lors de la détection simultanée d'une caractéristique de déconnexion (27) sur le câble de liaison (17) correspondant vers cet appareil de commande manuelle (9) découplé, détecte une séparation, effectuée consciemment par un opérateur (11), de l'interface enfichable à contact (20) au niveau de cet appareil de commande manuelle (9) puis, en remplacement de l'élément de commutation de sécurité (15) devenu par conséquent inactif sur l'appareil de commande manuelle (9) découplé, entre le dernier état de commutation valide de l'élément de commutation de sécurité (15) à fonction équivalente dans le circuit de sécurité (19), respectivement est conçu pour le pontage du circuit de sécurité (19) au cours de la déconnexion de l'appareil de commande manuelle (9), ou est prévu pour la commutation d'au moins un contact de remplacement resp. parallèle (34, 34') avec l'élément de commutation de sécurité (15) sur l'appareil de commande manuelle (9) si l'élément de commutation de sécurité (15) est disposé sur l'appareil de commande manuelle (9) découplé directement avant la déconnexion du câble de liaison (17) de l'appareil de commande manuelle (9) dans son état non actionné ou état de repos.

2. Système de commande selon la revendication 1, **caractérisé en ce que** le moyen de détection de caractéristique de déconnexion (28) est prévu pour la détection continue, périodiques ou déclenchée par des événements de caractéristiques de déconnexion (27) et **en ce que** le système de commande (1) est conçu pour la signalisation d'un message de panne lorsque le moyen de détection d'appareil de commande manuelle (31) détecte la connexion d'un appareil de commande manuelle (9), la présence d'une caractéristique de déconnexion (27) n'est cependant pas détectable par le moyen de détection de caractéristique de déconnexion (28).

3. Système de commande selon la revendication 1 ou 2, **caractérisé en ce que** le système de commande (1) est conçu pour la terminaison directe de son état de pontage en ce qui concerne le circuit de sécurité (19) et pour l'intégration directe, en remplacement, de l'au moins un élément de commutation de sécurité (15) dans un appareil de commande manuelle (9) enfiché instantanément dans le circuit de sécurité (19) du système de commande (1) lorsque, au moyen du moyen de détection d'appareil de commande manuelle (31), la connexion d'un appareil de commande manuelle (9) est détectée et, au moyen du moyen de détection de caractéristique de déconnexion (28), une caractéristique de déconnexion (27) est détectée.

4. Système de commande selon l'une des revendications précédentes, **caractérisé en ce que** la caractéristique de déconnexion (27) est constituée d'un étrier de liaison électrique (30) ou d'une résistance ohmique entre deux fils du câble de liaison (17) ou, en variante, est formée entre un fil et un blindage électromagnétique du câble de liaison (17).

5. Système de commande selon l'une des revendications 1 à 3, **caractérisé en ce que** la caractéristique de déconnexion (27) est constituée d'au moins un composant électrique avec des propriétés dépendant de la fréquence ou non linéaires ou d'un dispositif d'émission de signaux électriques à un fil ou un blindage électromagnétique du câble de liaison (17).

6. Système de commande selon l'une des revendications précédentes, **caractérisé en ce que** la caractéristique de déconnexion (27) est reliée de manière permanente avec le deuxième élément de couplage (22) ou le câble de liaison (17).

7. Système de commande selon l'une des revendications précédentes, **caractérisé en ce que** la caractéristique de déconnexion (27) peut également être détectée ou est également active lorsque l'interface enfichable à contact (20) est déconnectée et lorsque l'appareil de commande manuelle (9) est débranché du câble de liaison (17).

8. Système de commande selon l'une des revendications précédentes, **caractérisé en ce qu'**une deuxième interface enfichable (23) est prévue pour la connexion et la déconnexion, selon les besoins et sans outil, d'un connecteur de câble (24) du câble de liaison (17).

9. Système de commande selon la revendication 8, **caractérisé en ce qu'**un moyen de détection d'état de couplage (26) est prévu pour la détection de la présence ou de l'absence du connecteur de câble (24) au niveau de la deuxième interface enfichable (23).

10. Système de commande selon l'une des revendications précédentes, **caractérisé en ce que** le système de commande (1) comprend des dispositifs de commande répartis (7) qui sont prévus pour la mise en œuvre de tâches de commande primaires et **en ce qu'**au moins une unité de commande de connexion (36), physiquement distincte des dispositifs de commande (7) et reliée par câble avec au moins un dispositif de commande (7), est prévue pour l'intégration de l'appareil de commande manuelle (9) dans le système de commande (1).

11. Système de commande selon la revendication 10, **caractérisé en ce que** le moyen de détection de caractéristique de déconnexion (28), le moyen de détection d'appareil de commande manuelle (31) et le moyen de détection d'état de couplage (26) sont implémentés dans l'unité de commande de connexion (36).

12. Système de commande selon l'une des revendications précédentes, **caractérisé en ce que** l'appareil de commande manuelle (9) peut être utilisé pour l'exécution ou le contrôle d'instructions de commande potentiellement dangereuses lorsque l'appareil de commande manuelle (9) est intégré dans le système de commande (1) au moyen du câble de liaison (17) et l'au moins un élément de commutation de sécurité (15) de l'appareil de commande manuelle (9) est intégré dans le circuit de sécurité (19) de manière fonctionnelle.

13. Système de commande selon l'une des revendications précédentes, **caractérisé en ce que** le système de commande (1) limite les fonctions de l'appareil de commande (9) à des fonctions de surveillance des données ou à des fonctions de paramétrage non critique pour la sécurité lorsque l'appareil de commande manuelle (9) est intégré dans le système de commande (1) exclusivement au moyen de l'interface de communication sans fil (16).

14. Système de commande selon l'une des revendications précédentes, **caractérisé en ce que** le système de commande (1) signale l'existence d'une fonctionnalité de l'au moins un élément de commutation de sécurité (15) sur l'appareil de commande manuelle (9) par l'activation d'un éclairage (35) de l'au moins un élément de commutation de sécurité (15).

15. Système de commande selon la revendication 14, **caractérisé en ce que** le système de commande (1) est conçu pour la désactivation de l'éclairage (35) de l'élément de commutation de sécurité (15) lorsque l'appareil de commande manuelle (9) est intégré dans le système de commande (1) exclusivement par l'intermédiaire de l'interface de communication sans fil (16).
